(19) Europäisches Patentamt
European Patent Office
Office européen des brevets

(11) **EP 4 757 390 A1**

(12) **EUROPEAN PATENT APPLICATION**
published in accordance with Art. 153(4) EPC

(43) Date of publication:
**10.06.2026 Bulletin 2026/24**

(21) Application number: 24852345.8

(22) Date of filing: **07.08.2024**

(51) International Patent Classification (IPC):
**H04W 24/04** (2009.01)   **H04W 76/18** (2018.01)
**H04W 28/04** (2009.01)   **H04W 28/02** (2009.01)
**H04L 47/24** (2022.01)   **H04W 88/08** (2009.01)
**H04W 72/0446** (2023.01)

(52) Cooperative Patent Classification (CPC):
**H04L 47/24; H04W 24/04; H04W 28/02;
H04W 28/04; H04W 72/0446; H04W 76/18;
H04W 88/08**

(86) International application number:
**PCT/KR2024/011734**

(87) International publication number:
**WO 2025/033992 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023   KR 20230105133
22.12.2023   KR 20230190330**

(71) Applicant: **Samsung Electronics Co., Ltd.
Suwon-si, Gyeonggi-do 16677 (KR)**

(72) Inventors:
• **JO, Hyuna
Suwon-si, Gyeonggi-do 16677 (KR)**
• **YOO, Wansu
Suwon-si, Gyeonggi-do 16677 (KR)**
• **HONG, Youngki
Suwon-si, Gyeonggi-do 16677 (KR)**

(74) Representative: **Appleyard Lees IP LLP
G Mill
Dean Clough Industrial Park
Halifax HX3 5AH (GB)**

(54) **ELECTRONIC DEVICE AND OPERATION METHOD THEREOF**

(57)    An operation method of an electronic device may include setting labels for a plurality of medium access control (MAC) contexts, respectively, identifying a permissible degree of radio link failure (RLF) occurrence, identifying information about a target distributed unit (DU), determining a shortest duration in which an RLF associated with a MAC layer potentially occurs in the target cell, determining a permissible MAC scheduling interruption duration, predicting a maximum transmittable data size between a source DU and the target DU, determining priorities of one or more UEs among the plurality of UEs, and migrating a part of data of the MAC contexts for the target cell from the source DU to the target DU based on the priorities of the one or more UEs and the labels.

FIG. 4

## Description

### Technical Field

The present disclosure relates to a method and electronic device for migrating a medium access control (MAC) context from a source distributed unit (DU) to a target DU.

### Background Art

In the telecommunications industry, virtualized radio access network (vRAN) technology has grown rapidly. Traditional hardware-based radio access networks (RANs) require specific hardware to perform each function for communication, forcing mobile communication providers to construct RANs with hardware components from the same manufacturer due to issues such as hardware compatibility. In contrast, vRANs are based on software rather than hardware, and their communication functions may be performed by software components. That is, vRANs do not require specific hardware to perform communication functions, and their software components may be executed on a general-purpose server device to perform these functions. Accordingly, mobile communication providers are not locked into the products from a single manufacturer and may construct vRANs by using products from various manufacturers.

### Disclosure of Invention

### Solution to Problem

The present disclosure may be implemented in various ways, including as a method, a system, a device, or a computer program stored in a computer-readable storage medium.

In an embodiment of the present disclosure, an operation method of an electronic device may include setting labels for a plurality of medium access control (MAC) contexts, respectively. In an embodiment of the present disclosure, the method may include identifying a permissible degree of radio link failure (RLF) occurrence. In an embodiment of the present disclosure, the method may include identifying information about a target distributed unit (DU). In an embodiment of the present disclosure, the method may include determining, based on information about a plurality of user equipments (UEs) associated with a target cell, a shortest duration in which an RLF associated with a MAC layer potentially occurs in the target cell. In an embodiment of the present disclosure, the method may include determining, based on the shortest duration, a permissible MAC scheduling interruption duration. In an embodiment of the present disclosure, the method may include predicting, based on the permissible MAC scheduling interruption duration and the information about the target DU, a maximum transmittable data size between a source DU and the target DU. In an embodiment of the present disclosure, the method may include, based on determining that a data size of MAC contexts for the target cell is greater than the maximum transmittable data size, determining priorities of one or more UEs among the plurality of UEs and migrating a part of data of the MAC contexts for the target cell from the source DU to the target DU based on the priorities of the one or more UEs and the labels.

In an embodiment of the present disclosure, there may be provided a computer-readable recording medium having recorded thereon a program for causing a computer to execute the method.

In an embodiment of the present disclosure, an electronic device may include memory storing one or more instructions and at least one processor configured to execute the one or more instructions stored in the memory. In an embodiment of the present disclosure, the at least one processor may execute the one or more instructions to set labels for a plurality of MAC contexts, respectively. In an embodiment of the present disclosure, the at least one processor may execute the one or more instructions to identify a permissible degree of RLF occurrence. In an embodiment of the present disclosure, the at least one processor may execute the one or more instructions to identify information about a target DU 330. In an embodiment of the present disclosure, the at least one processor may execute the one or more instructions to determine, based on information about a plurality of UEs associated with a target cell, a shortest duration in which an RLF associated with a MAC layer potentially occurs in the target cell. In an embodiment of the present disclosure, the at least one processor may execute the one or more instructions to determine, based on the shortest duration, a permissible MAC scheduling interruption duration. In an embodiment of the present disclosure, the at least one processor may execute the one or more instructions to predict, based on the permissible MAC scheduling interruption duration and the information about the target DU, a maximum transmittable data size between a source DU and the target DU. In an embodiment of the present disclosure, the at least one processor may execute the one or more instructions to, based on determining that a data size of MAC contexts for the target cell is greater than the maximum transmittable data size, determine priorities of one or more UEs among the plurality of UEs and migrate a part of data of the MAC contexts for the target cell from the source DU to the target DU based on the priorities of the one or more UEs and the labels.

**Brief Description of Drawings**

FIG. 1 is a diagram illustrating an example of a wireless communication system architecture according to an embodiment of the present disclosure.

FIG. 2 is a flowchart illustrating an example of a method of migrating a cell from a source distributed unit (DU) to a target DU, according to an embodiment of the present disclosure.

FIG. 3A is a diagram illustrating an example of a source DU and a target DU before migration of medium access control (MAC) contexts from the source DU to the target DU, according to an embodiment of the present disclosure.

FIG. 3B is a diagram illustrating an example of a source DU and a target DU after migration of MAC contexts from the source DU to the target DU, according to an embodiment of the present disclosure.

FIG. 4 is a diagram illustrating an example of determining a reference label for each user equipment (UE) for migrating MAC contexts from a source DU to a target DU, according to an embodiment of the present disclosure.

FIG. 5A is a diagram illustrating an example of determining reference labels for a plurality of UEs, according to an embodiment of the present disclosure.

FIG. 5B is a diagram illustrating an example of determining reference labels for a plurality of UEs, according to an embodiment of the present disclosure.

FIG. 6A is a diagram illustrating an example of determining reference labels for a plurality of UEs, according to an embodiment of the present disclosure.

FIG. 6B is a diagram illustrating an example of determining reference labels for a plurality of UEs, according to an embodiment of the present disclosure.

FIG. 7 is a diagram illustrating an example of migrating MAC contexts from a source DU to a target DU based on a label of each MAC context and a reference label for each UE, according to an embodiment of the present disclosure.

FIG. 8 is a diagram illustrating an example in which migration of MAC contexts fails, according to an embodiment of the present disclosure.

FIG. 9 is a diagram illustrating an example of an operation method of an electronic device, according to an embodiment of the present disclosure.

FIG. 10 is a diagram illustrating an example of an electronic device according to an embodiment of the present disclosure.

**Mode for the Invention**

As the present disclosure allows for various changes and numerous embodiments, particular embodiments will be illustrated in the drawings and described in detail. However, this is not intended to limit the present disclosure to particular modes of practice, and it is to be appreciated that all changes, equivalents, and substitutes that do not depart from the spirit and technical scope of the present disclosure are encompassed in the present disclosure.

In describing embodiments, detailed descriptions of the related art will be omitted when it is deemed that they may unnecessarily obscure the gist of the present disclosure. In addition, ordinal numerals (e.g., 'first' or 'second') used in the description of an embodiment are identifier codes for distinguishing one component from another. In addition, unless explicitly indicated otherwise in the context, the singular forms "a," "an," and "the" may be understood to include plural subjects.

In addition, it should be understood that blocks in each flowchart, and combinations of flowcharts may be performed by one or more computer programs including computer-executable instructions. The one or more computer programs may be all stored in a single memory unit, or may be divided and stored in a plurality of different memory units.

All functions or operations described herein may be performed by a single processor or a combination of processors. The processor or the combination of processors may be circuitry configured to perform processing, and may include circuitry such as an application processor (AP), a communication processor (CP), a graphics processing unit (GPU), a neural processing unit (NPU), a microprocessor unit (MPU), a system-on-chip (SoC), or an integrated circuit (IC).

Hereinafter, embodiments of the present disclosure will be described in detail with reference to the accompanying drawings to allow those of skill in the art to easily carry out the embodiments. The present disclosure may, however, be embodied in many different forms and should not be construed as being limited to embodiments set forth herein. Prior to the detailed description of the disclosure, the terms used herein may be defined or understood as follows.

In the present specification, it should be understood that when components are 'connected' or 'coupled' to each other, the components may be directly connected or coupled to each other, but may alternatively be connected or coupled to each other with a component therebetween, unless specified otherwise. In addition, 'connection' may include a wireless connection or a wired connection.

In addition, as used herein, a component expressed as, for example, '...er (or),' '... unit,' '... module,' or the like, may denote a unit in which two or more components are combined into one component or one component is divided into two or more components according to its function. In addition, each component to be described below may additionally perform, in addition to its primary function, some or all of functions of other components, and some functions among primary functions of the respective components may be exclusively performed by other components.

As used herein, the expression "at least one of a, b, or c" may indicate only a, only b, only c, both a and b, both a and c, both b and c, all of a, b, and c, or variations thereof. As used herein, the expression "a or b" may refer to "a," "b," "a and b," or variations thereof. As used herein, the expression "a (or, b or c)" or the expression "a, b, or c" may refer to "a," "b," "c," "a and b," "a and c," "b and c," "all of a, b and c," or variations thereof.

In an embodiment of the present disclosure, the term "migration" may include moving, copying, replicating, or synchronizing information subject to migration, which is included in an arbitrary logical or physical space, to another arbitrary space. In an embodiment of the present disclosure, the expression "migration from A to B" may include causing information subject to migration (e.g., context information), which is included, stored, or configured in a space A (or a device A or a module A), to be included, stored, or configured in a space B (or a device B or a module B). In an embodiment of the present disclosure, "migration from A to B" may include causing information subject to migration, which is included, stored, or configured in a space A (or a device A or a module A), to be included, stored, or configured in a space B (a device B or a module B), and removing, deleting, or releasing the information subject to migration from the space A (the device A or the module A). In an embodiment of the present disclosure, "migration from A to B" may include configuring information used by a module A (or a device A) such that it is available to a module B (or a device B).

In an embodiment of the present disclosure, "cell migration" may include migration of at least one of information, a context, or an interface associated with a cell. For example, "cell migration" may include migration of cell configuration information. For example, "cell migration" may be migration on a per-cell basis, and may include migration of cell configuration information and user equipment (UE) contexts of UEs associated with a cell. For example, "cell migration" may be migration on a per-UE basis, and may include migration of UE contexts of UEs associated with a cell. For example, "cell migration" may be migration on a per-UE basis, and may include migration of an interface for user data (e.g., an F1-U interface).

In an embodiment of the present disclosure, a "medium access control (MAC) context" may include configuration information or a context included in a MAC layer. For example, a MAC context may include cell configuration information (or a cell context) that is included (or configured or stored) in a MAC layer. For example, a MAC context may include a UE context (or UE configuration information) that is included (or configured or stored) in a MAC layer.

In an embodiment of the present disclosure, "cell configuration information" may include information about basic settings, operating methods, configurations, or parameters of each cell in a wireless communication system. For example, "cell configuration information" may include a frequency band, a channel bandwidth, frequency allocation information, transmission output power settings, a cell identifier, settings in time and frequency domains, interference management with other cells and base stations, scheduling-related information about (e.g., a downlink (DL)/uplink (UL) max resource block, a physical downlink shared channel (PDSCH), a physical uplink shared channel (PUSCH), or a synchronization signal block (SSB)), timing-related information (e.g., the number of slots per flame), or information about UEs associated with a cell (e.g., the number of UEs connected to the cell).

In an embodiment of the present disclosure, a "UE context" may include information for wireless communication of a UE in a wireless communication system. For example, a "UE context" may include location information of the terminal, a terminal identifier, a state of the terminal, service requirements, information about a currently used network and cell, or performance information, capability information, security information, or authentication information of the terminal. For example, a "UE context" may include context-specific unique numbers for UEs connected to a base station (e.g., a radio network temporary identifier (RNTI)), information about a DL data volume per UE (e.g., buffer occupancy (BO)), information about a UL data volume per UE (e.g., a buffer status report (BSR)), a physical downlink control channel (PDCCH) monitoring period for a UE to transmit and receive new DL/UL traffic (e.g., discontinuous reception (DRX)), and retransmission information per UE (e.g., hybrid automatic repeat request (HARQ) information). For example, a "UE context" may include different parameter values or data respectively for a plurality of UEs associated with the same cell. For example, a "UE context" may include common or shared parameter values or data for a plurality of UEs associated with the same cell.

In an embodiment of the present disclosure, a "connection relationship" may include the meaning of an "access relationship," an "inclusion relationship," an "attachment relationship," or a "matching relationship." For example, the term "connected" may include the meaning of "accessed," "included," "attached," or "matched." In an embodiment of the present disclosure, a "connection" may include the capability for wired or wireless data communication. For example, "A is connected to B" may mean that A and B are capable of data communication, that is, they may transmit and receive data to and from each other.

In an embodiment of the present disclosure, "A performing operation B" may include "A directly performing operation B," "A instructing C to perform operation B," or "A controlling C to perform operation B."

In an embodiment of the present disclosure, "UEs associated with a cell" may include a UE connected to the cell, a UE attached to the cell, a UE that communicates with (i.e., transmits and receives data to and from) a radio unit (RU) including the cell, a UE that receives a communication service through the cell, a UE that transmits and receives data through the cell, a UE that accesses a network through the cell, a UE included in a range of the cell (e.g., an effective range or a communication range), a UE that requests radio resources of the cell, a UE that has been allocated radio resources of the cell, and the like. For example, connections for one or more UEs associated with a target cell may be configured and managed based on cell configuration information about the target cell.

In an embodiment of the present disclosure, a "path" or an "interface" may refer to a module (e.g., a software module or a hardware module) that enables data transmission and reception. In an embodiment of the present disclosure, a "path" or an "interface" may refer to a logical or physical connection relationship. In an embodiment of the present disclosure, a "path" or an "interface" may refer to a data transmission and reception path. In an embodiment of the present disclosure, "configuring an interface between A and B" may refer to configuring A and B such that they may transmit and receive data to and from each other and process the received data.

In an embodiment of the present disclosure, "scale-out for a distributed unit (DU)" and "scaling-out for a DU" may include adding a new DU to a DU pool to which the DU belongs. In an embodiment of the present disclosure, "scale-out for a DU" and "scaling-out for a DU" may include migrating a cell included in the DU to another DU (e.g., a newly added DU).

In an embodiment of the present disclosure, "scale-in for a DU" and "scaling-in for a DU" may include removing the DU from a DU pool. In an embodiment of the present disclosure, "scale-in for a DU" and "scaling-in for a DU" may include migrating a cell included in the DU to another DU (e.g., a pre-existing DU).

In an embodiment of the present disclosure, a "reference label" may include a label that serves as a criterion for selecting a MAC context to be migrated from among a plurality of MAC contexts. For example, a MAC context corresponding to a label having an importance greater than or equal to that of a "reference label" may be selected (or designated or determined) as a MAC context to be migrated. For example, a "reference label for a UE" may include a label with the lowest importance among labels of MAC contexts to be migrated for the UE. For example, an electronic device may determine a reference label for a UE and select, for the UE, MAC contexts corresponding to labels with an importance greater than or equal to that of the reference label, as MAC contexts to be migrated. For example, when a first reference label is determined (or configured) for a first UE and a second reference label is determined (or configured) for a second UE, the electronic device may migrate MAC contexts for the first UE that have an importance greater than or equal to that of the first reference label, and MAC contexts for the second UE that have an importance greater than or equal to that of the second reference label.

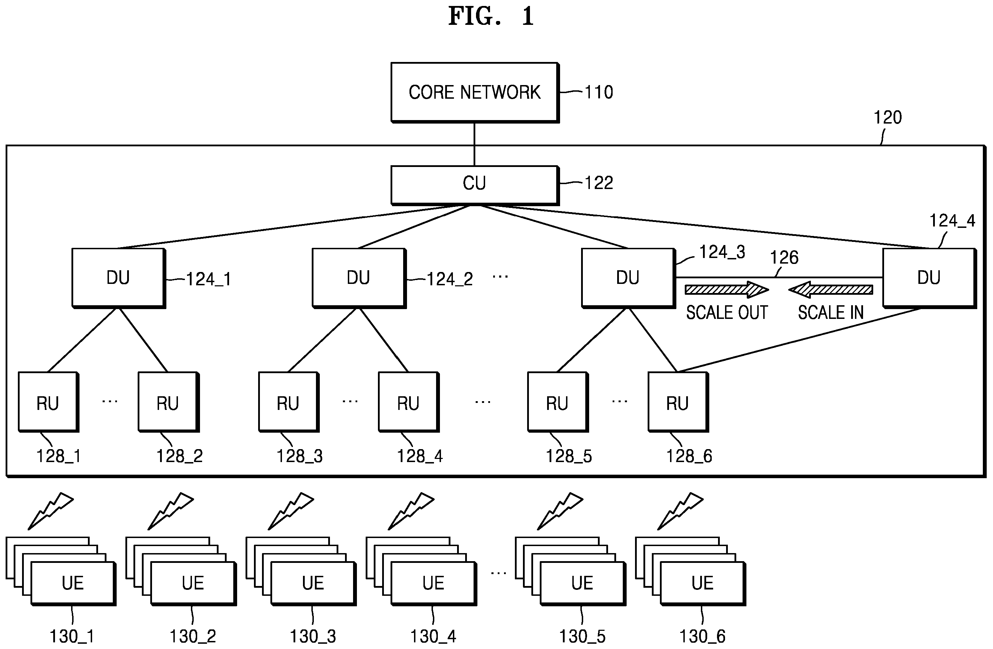

In an embodiment of the present disclosure, a "radio resource control (RRC) idle state" may include a state in which there is no DL/UL data stream. For example, a UE may transition from an RRC connected state (or an RRC active state) or an RRC inactive state to an RRC idle state. In an embodiment of the present disclosure, an "RRC inactive state" may include a state in which a base station and a UE are connected to each other, but signaling between them is minimized to reduce power consumption. For example, a UE may transition from an RRC connected state to an RRC inactive state. For example, when transitioning to an RRC inactive state (e.g., RRC connection suspend), the base station and the UE may retain, without discarding, an access stratum (AS) context (UE Inactive AS Context), which includes configuration information required for RRC connection (e.g., C-RNTI or cellIdentity). Thus, a UE in an RRC inactive state may quickly transition to an RRC connected state. In an embodiment of the present disclosure, an "RRC inactive state" or an "RRC connected state" may include a state of being connected to a base station and having an active DL/UL data stream. In the present disclosure, the terms "RRC inactive state" and "RRC connected state" may be used interchangeably.FIG. 1 is a diagram illustrating an example of a wireless communication system architecture according to an embodiment of the present disclosure.

In an embodiment of the present disclosure, a wireless communication system may include a core network 110 and a radio access network (RAN) 120. The core network 110 may include user authentication information for each communication provider and the like, and may be a platform network connected via optical cables to servers and systems of various service providers.

In an embodiment of the present disclosure, the RAN 120 may include one or more RUs 128_1, 128_2, 128_3, 128_4, 128_5, and 128_6, one or more DUs 124_1, 124_2, 124_3, and 124_4, and a centralized unit (CU) 122. In an embodiment of the present disclosure, the RAN 120 may include a virtualized RAN (vRAN) system, but is not limited thereto. For example, the RAN 120 may include a 5G system (5GS), a 4G system, or other wireless communication systems, and may also refer to a wireless communication system to be developed in the future.

In an embodiment of the present disclosure, the CU 122 may be an entity that performs the functions of some of protocol layers of a network. For example, the CU 122 may be an entity that performs the network functions of an RRC layer and a packet data convergence protocol (PDCP) layer, but the functions that the CU 122 may handle are not limited to the functions of the aforementioned RRC layer and PDCP layer. For example, the CU 122 may perform functions such as setting quality of service (QoS), reordering packets, or setting and processing security. For example, the CU 122 may be a virtualized-CU (vCU) of a vRAN system, but is not limited thereto.

A single CU 122 may be connected to N DUs, where N may be any integer greater than 1. The CU 122 may be connected to the DUs 124_1, 124_2, 124_3, and 124_4 via an interface. For example, the interface between the CU 122 and the DUs 124_1, 124_2, 124_3, and 124_4 may be an F1 interface (or a midhaul interface). For example, the F1 interface may include F1-C, which is an F1 interface for a control plane, and F1-U, which is an F1 interface for a user plane.

The RAN 120 may include the DU 124_1, the DU 124_2, and the DU 124_3. The DU 124_1, the DU 124_2, and the DU 124_3 may perform the same functions, and hereinafter, the DU 124_3 will be described as an example.

In an embodiment of the present disclosure, the DU 124_3 may be an entity that performs the functions of some of the remaining protocol layers of the network, excluding the layers whose functions are performed by the CU 122. For example, the DU 124_3 may be an entity that performs network functions (e.g., a baseband function) of a radio link control (RLC) layer, an MAC layer, and a physical (PHY) layer, but the functions that the DU 124_3 may handle are not limited to the functions of the aforementioned RLC, MAC, and PHY layers. For example, the DU 124_3 may perform functions such as buffering, radio resource scheduling, or data reprocessing. For example, the DU 124_3 may be a virtualized-DU (vDU) of a vRAN system, but is not limited thereto. For example, the DU 124_3 may correspond to a component module, an arbitrary processing unit, a deployment unit that performs arbitrary processing, software, or the like. For example, the DU 124_3 may correspond to a single server.

A single DU may be connected to N RUs, where N may be any integer greater than 1. Referring to FIG. 1, the DU 124_1 may be connected to the RU 128_1, ..., and the RU 128_2, the DU 124_2 may be connected to the RU 128_3, ..., and the RU 128_4, and the DU 124_3 may be connected to the RU 128_5, ..., and the RU 128_6. In an embodiment of the present disclosure, the DU 124_3 may be connected to the RUs 128_5 and 128_6 via an interface. For example, the interface between the DU 124_3 and the RUs 128_5 and 128_6 may be a fronthaul interface.

The RU 128_1, the RU 128_2, the RU 128_3, the RU 128_4, the RU 128_5, and the RU 128_6 may perform the same functions, and hereinafter, the RU 128_6 will be described as an example.

In an embodiment of the present disclosure, the RU 128_6 may be an entity that performs some functions of the PHY layer other than those handled by the DU 124_3. For example, the DU 124_3 may perform high-PHY layer functions, and the RU 128_6 may perform low-PHY layer functions. For example, the RU 128_6 may transmit and receive data through a radio-frequency (RF) antenna.

In a traditional RAN system, a DU may be connected one-to-one with a cell site that includes one or more RUs, and the processing capacity of the DU may be determined based on the maximum traffic that the cell site may receive. According to changes in traffic trends over time, the period of maximum traffic is limited (e.g., 17:00 to 21:00), and during other times, there may be unused DU resources, that is, remaining available resources.

A vRAN system according to an embodiment of the present disclosure may apply a vDU pooling technology, which breaks the traditional one-to-one relationship between a DU and a cell site (a set of RUs) and virtualizes the DUs by pooling them. In this case, the number of servers required to build a RAN system may be reduced, and capital expenditures (CAPEX) may be lowered. In addition, power consumption may be reduced compared to traditional RAN systems, and operating expenditures (OPEX) may be lowered.

A vRAN system according to an embodiment of the present disclosure may apply a vCU pooling technology, which virtualizes CUs by pooling them. In this case, the number of servers required to build a RAN system may be reduced, and capital expenditures (CAPEX) may be lowered. In addition, power consumption may be reduced compared to traditional RAN systems, and OPEX may be lowered.

In an embodiment of the present disclosure, a vDU scaling method may be used in the RAN 120 to efficiently use server resources by dynamically scaling DUs out or in according to the current traffic situation. In the case of scaling out, a new DU 124_4 may be generated in the RAN 120, but the present disclosure is not limited thereto. For example, the DU 124_4 may pre-exist in the RAN 120. In the case of scaling in, the DU 124_4 may pre-exist in the RAN 120.

Hereinafter, the DU 124_3 may be referred to as the first DU 124_3, and the DU 124_4 may be referred to as the second DU 124_4. In FIG. 1, in the case of a scale-out, the first DU 124_3 may correspond to a source DU, and the second DU 124_4 may correspond to a target DU. In FIG. 1, in the case of a scale-in, the first DU 124_3 may correspond to a target DU, and the second DU 124_4 may correspond to a source DU. The first DU 124_3 and the second DU 124_4 may be connected to each other via an inter-DU interface (Xd interface) 126.

In an embodiment of the present disclosure, a scale-out may include adding a new DU (e.g., the second DU 124_4) to the DU pool for the CU 122. For example, when the amount of traffic to be processed by the first DU 124_3 included in the DU pool increases, the second DU 124_4 may be added to the DU pool. For example, adding the second DU 124_4 to the DU pool may include adding, to the DU pool, a module corresponding to the second DU 124_4. For example, adding the second DU 124_4 to the DU pool may include causing an additional server, which is capable of processing data, to initiate its operation. When the data processing capacity or performance of the first DU 124_3 (e.g., an existing server) reaches a limit, the second DU 124_4 (as a non-limiting example, a server with similar specifications) may be added to the communication system via a scale-out. In this case, a cell whose data is processed by the first DU 124_3 may be migrated from the first DU 124_3 to the second DU 124_4, such that the data of the cell is processed by the second DU 124_4.

In an embodiment of the present disclosure, a scale-in may include removing the second DU 124_4 from the DU pool. For example, when the amount of traffic to be processed by the DUs included in the DU pool decreases, the second DU 124_4 may be removed from the DU pool. For example, removing the second DU 124_4 from the DU pool may include removing a module corresponding to the second DU 124_4. For example, removing the second DU 124_4 from the DU pool may include causing a server that had been processing data to cease its operation. By using a scale-in, the number of servers that are no longer needed to operate may be reduced, and resources may be conserved. For a scale-in, a cell whose data is processed by the second DU 124_4 may be migrated from the second DU 124_4 to the first DU 124_3, such that the data of the cell is processed by the first DU 124_3.

In an embodiment of the present disclosure, in addition to scaling cases that involve adding or removing the second DU 124_4 to or from the DU pool, a cell whose data is processed by the second DU 124_4 may be migrated from the second DU 124_4 to the first DU 124_3 such that the data of the cell is processed by the first DU 124_3, or a cell whose data is processed by the first DU 124_3 may be migrated from the first DU 124_3 to the second DU 124_4 such that the data of the cell is processed by the second DU 124_4. For example, a cell may be migrated from the first DU 124_3, which has a high traffic volume, to the second DU 124_4, which has a relatively low traffic volume, such that the data of the cell is processed by the second DU 124_4.

To prevent UE disconnection during a cell migration process, it is necessary to minimize the duration for which the scheduling of UE data traffic is interrupted. An embodiment of the present disclosure may provide a migration method for minimizing malfunctions and performance degradation of a MAC layer (L2 layer), which schedules radio resource allocation.

The MAC layer of a DU may perform scheduling based on information about cells and UEs associated with (e.g., attached to) the DU. Thus, for an operation without scheduling interruption even after a scale-in or scale-out, the target DU requires the data that was managed by the source DU. However, migrating all MAC contexts during DU scaling requires a significant amount of time, during which MAC scheduling needs to be interrupted, and thus, such extended interruption periods may cause simultaneous radio link failures (RLFs) for multiple UEs associated with the target cell.

When RLFs occur for a plurality of UEs simultaneously in the target cell, the affected UEs need to perform random access (RA) again to transmit traffic, which may cause overhead in neighboring cells and degrade the QoS of the network. Therefore, an embodiment of the present disclosure may provide a method that, instead of migrating all MAC contexts of the target cell, performs a scale-in/out by considering various possible RLF scenarios to determine a point in time that minimizes RLF occurrence, and selecting MAC contexts to be migrated at the determined point in time.

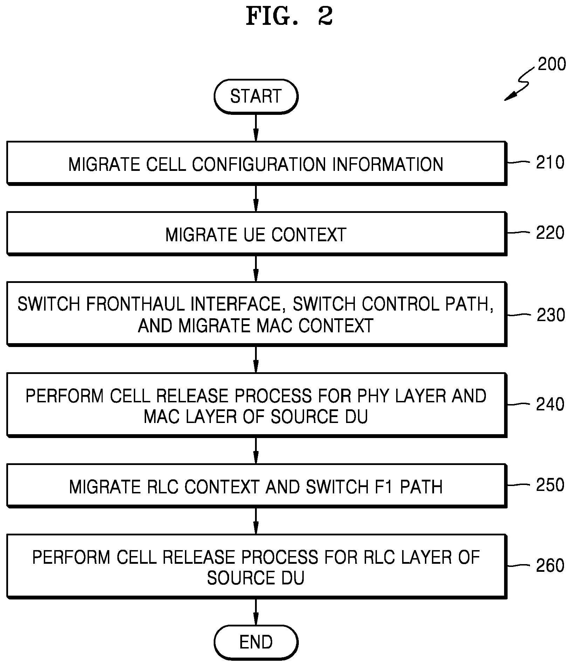

FIG. 2 is a flowchart illustrating an example of a method of migrating a cell from a source DU to a target DU, according to an embodiment of the present disclosure.

In describing FIG. 2, redundant descriptions provided above with reference to FIG. 1 may be omitted.

FIG. 2 may illustrate an example of a method 200, performed by an electronic device, of migrating a target cell from a source DU to a target DU. In an embodiment of the present disclosure, the electronic device that performs the method 200 may include a cell migration module (e.g., a scaling agent module) configured to manage, control, or process cell migration. In an embodiment of the present disclosure, the electronic device that performs the method 200 may include a device of the source DU, a device of the target DU, or a separate, different device. For example, the source DU (or the device of the source DU) may include a cell migration module. For example, the target DU (or the device of the target DU) may include a cell migration module. For example, the separate device that is different from the source DU and the target DU may include a cell migration module.

Referring to FIG. 2, the method 200 according to an embodiment of the present disclosure may include operations 210 to 260. In an embodiment of the present disclosure, operations 210 to 260 of the method 200 may be performed by the cell migration module included in the electronic device. In an embodiment of the present disclosure, operations 210 to 260 of the method 200 may be performed by at least one processor included in the electronic device. The method 200 is not limited to that illustrated in FIG. 2, and in one or more embodiments, the method 200 may further include operations not illustrated in FIG. 2, or some operations may be omitted.

In an embodiment of the present disclosure, the electronic device may perform the method 200 in response to identifying (or receiving) a DU scaling (e.g., scaling out or scaling in) request (or instruction) from an operations, administration, and maintenance (OAM) module. In an embodiment of the present disclosure, the electronic device may perform the method 200 in response to identifying (or receiving) a cell migration request (or instruction) from an OAM module. For example, the electronic device may identify (or receive), from an OAM module, a request (or an instruction) for cell migration from a source DU to a target DU. For example, the electronic device may identify (or receive), from an OAM module, a request (or an instruction) for migration of a target cell.

In an embodiment of the present disclosure, the electronic device may perform the method 200 in response to determining DU scaling. In an embodiment of the present disclosure, the electronic device may perform the method 200 in response to determining cell migration. For example, the electronic device may determine cell migration from a source DU to a target DU. For example, the electronic device may determine to migrate a target cell of a source DU.

In operation 210, the electronic device may migrate cell configuration information for a target cell from the source DU to the target DU. In an embodiment of the present disclosure, the electronic device may replicate, to the target DU, the cell configuration information for the target cell that is included (or configured or stored) in the source DU. The cell configuration information for the target cell may include information about a frequency band of the target cell, a radio resource scheduling method, a common signal transmitted to one or more UEs associated with the target cell, and the like.

In an embodiment of the present disclosure, the migration of the cell configuration information may include migrating or replicating data of the cell configuration information. For example, the migration of cell configuration information for the target cell from the source DU to the target DU may include setting or determining a value of particular cell configuration information in the target DU, to be the value corresponding to the particular cell configuration information for the target cell in the source DU. For example, the migration of cell configuration information for the target cell from the source DU to the target DU may include setting or determining a value of particular cell configuration information for the target cell in the target DU, to be the value of the particular cell configuration information for the target cell, which is stored in the source DU.

In an embodiment of the present disclosure, the electronic device may migrate cell configuration information for a target cell, which is included (or configured or stored) in at least one of an RLC layer, a MAC layer, or a PHY layer of the source DU, to at least one of an RLC layer, a MAC layer, or a PHY layer of the target DU. For example, the electronic device may migrate cell configuration information included in the RLC layer of the source DU to the RLC layer of the target DU. For example, the electronic device may migrate cell configuration information included in the MAC layer of the source DU to the MAC layer of the target DU. For example, the electronic device may migrate cell configuration information included in the PHY layer of the source DU to the PHY layer of the target DU. In an embodiment of the present disclosure, the cell configuration information included in the RLC layer, the MAC layer, and the PHY layer of the source DU may be different from, partially different from, or identical to one another.

In an embodiment of the present disclosure, the electronic device may migrate a target cell from the source DU to the target DU by configuring the target cell in the target DU by using the same information (e.g., data and parameters) that was used to configure the target cell in the source DU. For example, the electronic device may generate (or configure) cell configuration information for the target cell in the target DU by using the parameters that were used to generate (or configure) the cell configuration information for the target cell in the source DU.

In an embodiment of the present disclosure, the electronic device may directly copy (or replicate), to the target DU, cell configuration information for the target cell included in the source DU. For example, the cell configuration information for the target cell may be migrated, copied, or replicated from the source DU to the target DU through an inter-DU interface. For example, the electronic device may control the source DU to copy the cell configuration information for the target cell and provide the copied cell configuration information to the target DU. For example, the electronic device may obtain the cell configuration information for the target cell from the source DU and provide the obtained cell configuration information to the target DU.

In operation 220, the electronic device may migrate (or copy or replicate) one or more UE contexts for the target cell from the source DU to the target DU. In an embodiment of the present disclosure, the electronic device may migrate one or more UE contexts for the target cell from the source DU (e.g., the MAC layer of the source DU) to the target DU (e.g., the MAC layer of the target DU). For example, the electronic device may migrate one or more UE contexts for the target cell, which are included (or stored or configured) in the MAC layer of the source DU, to the MAC layer of the target DU.

In an embodiment of the present disclosure, the migration of a UE context may include migrating or replicating data of the UE context. For example, the migration of a UE context for the target cell from the source DU to the target DU may include setting or determining a value of a particular UE context in the target DU, to be the value corresponding to the particular UE context for the target cell in the source DU. For example, the migration of a UE context for the target cell from the source DU to the target DU may include setting or determining a value of a particular UE context for a particular UE in the target DU, to be the value corresponding to the particular UE context for the particular UE associated with the target cell in the source DU.

The UE contexts for the target cell may include UE contexts for the UEs associated with the target cell, which are included (or stored or configured) in the source DU. For example, the UE contexts for the target cell may include contexts for each of the UEs associated with the target cell, or a common (or shared) context for the UEs associated with the target cell. For example, the UE contexts for the target cell may include at least some of MAC contexts that are configured (or stored or included) for the target cell in the MAC layer of the DU. For example, the UE contexts for the target cell may include UE contexts that have been generated (or stored or configured), accumulated, or updated (or changed) in the source DU (e.g., the MAC layer of the source DU) before operation 220 is performed.

In an embodiment of the present disclosure, the electronic device may generate (or store or configure), accumulate, or update (or change) one or more UE contexts for the target cell in the target DU (e.g., the MAC layer of the target DU) by using information (e.g., data and parameters) that was used to generate (or store or configure), accumulate, or update (or change) one or more UE contexts for the target cell in the source DU (e.g., the MAC layer of the source DU).

In an embodiment of the present disclosure, the electronic device may directly copy (or replicate) one or more UE contexts for the target cell, which are included in the source DU (e.g., the MAC layer of the source DU), to the target DU (e.g., the MAC layer of the target DU). For example, one or more UE contexts for the target cell may be migrated (or copied or replicated) from the source DU to the target DU through an inter-DU interface. For example, the electronic device may control the source DU to copy (or replicate) one or more UE contexts for the target cell included in the MAC layer to provide them to the target DU. For example, the electronic device may obtain one or more UE contexts for the target cell from the source DU and provide the obtained one or more UE contexts to the target DU.

In operation 230, the electronic device may switch (or change) a fronthaul interface from the source DU to the target DU, switch (or change) at least one control path from the source DU to the target DU, and migrate one or more MAC contexts for the target cell from the source DU to the target DU. In an embodiment of the present disclosure, the electronic device may stop MAC scheduling of the source DU and perform operation 230. For example, the electronic device may buffer a fronthaul message queue and perform operation 230.

In an embodiment of the present disclosure, the electronic device may switch (or change) the fronthaul interface, i.e., the RU-PHY interface, from 'the RU of the target cell' - 'the PHY layer of the source DU' to 'the RU of the target cell' - 'the PHY layer of the target DU'. In an embodiment of the present disclosure, the electronic device may switch (or change) a control path for the MAC layer or the PHY layer from the source DU to the target DU. For example, the control path may include a path through which control messages, data, or traffic for the target cell are processed or transmitted and received. For example, the electronic device may switch the path between the RLC layer and the MAC layer, from a path between the RLC layer of the source DU and the MAC layer of the source DU, to a path between the RLC layer of the source DU and the MAC layer of the target DU.

In an embodiment of the present disclosure, the electronic device may migrate one or more MAC contexts for the target cell, which are included (or configured) in the source DU (e.g., the MAC layer of the source DU), to the target DU (e.g., the MAC layer of the target DU). For example, the electronic device may migrate at least a part of data of MAC contexts for the target cell from the source DU to the target DU. For example, the electronic device may synchronize at least a part of the data of the MAC contexts for the target cell included in the source DU, with the target DU.

In an embodiment of the present disclosure, the electronic device may generate (or store or configure), accumulate, or update (or change) one or more MAC contexts for the target cell in the target DU (e.g., the MAC layer of the target DU) by using information (e.g., data and parameters) that was used to generate (or store or configure), accumulate, or update (or change) one or more MAC contexts for the target cell in the source DU (e.g., the MAC layer of the source DU).

In an embodiment of the present disclosure, the electronic device may directly copy (or replicate) one or more MAC contexts for the target cell, which are included in the source DU (e.g., the MAC layer of the source DU), to the target DU (e.g., the MAC layer of the target DU). For example, one or more MAC contexts for the target cell may be migrated (or copied or replicated) from the source DU to the target DU through an inter-DU interface. For example, the electronic device may control the source DU to copy (or replicate) one or more MAC contexts for the target cell included in the MAC layer to provide them to the target DU. For example, the electronic device may obtain one or more MAC contexts for the target cell from the source DU and provide the obtained one or more MAC contexts to the target DU.

In an embodiment of the present disclosure, the MAC contexts for the target cell may include configuration information or a context that is configured (or stored or included) in the MAC layer of the DU for the target cell. For example, the MAC contexts for the target cell may include cell configuration information or a cell context for the target cell, which is included (or configured or stored) in the MAC layer of the source DU. For example, the MAC contexts for the target cell may include configuration information (e.g., UE configuration information) or a context (e.g., a UE context) that is included (or stored or configured) in the MAC layer for each of a plurality of UEs associated with the target cell. For example, the MAC contexts for the target cell may include contexts (or configuration information) for each of a plurality of UEs associated with the target cell, or a common context (or configuration information) for the plurality of UEs.

In an embodiment of the present disclosure, the MAC contexts for the target cells in operation 230 of FIG. 2 may include MAC contexts for the target cell in the source DU, which are not included (or configured or stored) in the target DU. For example, the MAC contexts for the target cell in operation 230 of FIG. 2 may include MAC contexts that have not been migrated (or replicated) from the source DU to the target DU. For example, the MAC contexts for the target cell in operation 230 of FIG. 2 may include MAC contexts that were generated (or configured) in the source DU (e.g., the MAC layer) after operation 210 or 220.

In an embodiment of the present disclosure, the data of at least some of the MAC contexts for the target cell in operation 230 of FIG. 2 may be different from data of at least some of the MAC contexts for the target cell that is included (or configured or stored) in the target DU. For example, cell configuration information or UE contexts included in the MAC layer of the DU may be included in the MAC contexts, and after the cell configuration information or the UE contexts for the target cell are migrated to the MAC layer of the target DU, data of at least some of the MAC contexts for the target cell in the MAC layer of the source DU may be generated, accumulated, or updated (or changed). For example, data (e.g., a value) of at least some of the MAC contexts for the target cell of the source DU may be generated (or configured), accumulated, or updated (or changed) in the source DU (e.g., the MAC layer) after operation 210 or 220. For example, the MAC contexts may have different data update periods.

In an embodiment of the present disclosure, the migration of a MAC context may include migrating or replicating the data of the MAC context. For example, the migration of a MAC context for the target cell from the source DU to the target DU may include setting or determining a value of a particular MAC context in the target DU, to be the value corresponding to the particular MAC context for the target cell in the source DU. For example, the migration of a MAC context for the target cell from the source DU to the target DU may include setting or determining a value of a particular MAC context for the target cell in the target DU, to be the value of the particular MAC context for the target cell stored in the source DU.

In an embodiment of the present disclosure, after performing operation 230, the electronic device may restart the buffered fronthaul message queue. As the fronthaul interface is switched from the source DU to the target DU, the previously buffered fronthaul message queue may be transmitted to the target DU. For example, data may be transmitted and received between the RU and the PHY layer of the target DU.

In operation 240, the electronic device may control (or perform) a cell release process for the PHY layer and the MAC layer of the source DU. In an embodiment of the present disclosure, the electronic device may release the target cell from the PHY layer and the MAC layer of the source DU. For example, the electronic device may remove (or release) configuration information or a context for the target cell that is included (or configured) in the PHY layer or the MAC layer of the source DU. For example, the electronic device may remove (or release) configuration information or contexts for each of a plurality of UEs associated with the target cell, which are included (or configured) in the PHY layer or the MAC layer of the source DU. For example, the electronic device may remove (or release), from the PHY layer or the MAC layer of the source DU, at least a part of the cell configuration information, the UE contexts, or the MAC contexts that have been migrated to the target DU.

For example, when the fronthaul message queue and the data from the RU are seamlessly transmitted to the target DU, the electronic device may perform the cell release process for the PHY layer and the MAC layer of the source DU. For example, when communication for the UEs associated with the target cell is enabled, the electronic device may perform the cell release process for the PHY layer and the MAC layer of the source DU. For example, the electronic device may identify that the communication state of the target cell is a communicable state, and remove (or delete) the migrated cell contexts or UE contexts from the PHY layer or the MAC layer of the source DU. The communicable state may include a communication state that satisfies arbitrary criteria such as latency or data processing rate.

In operation 250, the electronic device may migrate one or more RLC contexts for the target cell from the source DU to the target DU, and switch one or more F1 paths (e.g., a midhaul interface) for the target cell from the source DU to the target DU. For example, the one or more RLC contexts for the target cell of the source DU may include configuration information or a context for the target cell, which is included (or configured or stored) in the RLC layer of the source DU. For example, the one or more RLC contexts for the target cell of the source DU may include configuration information or a context for each of a plurality of UEs associated with the target cell, which is included (or configured or stored) in the RLC layer of the source DU. In an embodiment of the present disclosure, the electronic device may migrate one or more RLC contexts for the target cell from the source DU (e.g., the RLC layer of the source DU) to the target DU (e.g., the RLC layer of the target DU) on a per-UE basis.

The F1 paths may include a path (or an interface) between a DU (e.g., the RLC layer of the DU) and a CU. For a single UE associated with the target cell, one or more F1 paths may be configured between the source DU and the CU. In an embodiment of the present disclosure, the electronic device may switch one or more F1 paths for each of a plurality of UEs associated with the target cell, from the source DU to the target DU on a per-UE basis. For example, the electronic device may switch F1 paths for each of a plurality of UEs associated with the target cell, from 'the RLC layer of the source DU' - 'the CU' to 'the RLC layer of the target DU' - 'the CU', on a per-UE basis.

In an embodiment of the present disclosure, instead of migrating the RLC contexts or switching the F1 paths for a plurality of UEs associated with the target cell all at once, the electronic device may migrate the RLC contexts and switch the F1 paths through multiple migration operations on a per-UE basis (e.g., for each UE group). For example, the electronic device may migrate the RLC contexts of a UE group, which includes at least one of the plurality of UEs associated with the target cell, from the source DU to the target DU, and switch one or more F1 paths for the UE group from the source DU to the target DU. For example, the electronic device may migrate RLC contexts and change F1 paths sequentially for a plurality of UE groups.

In operation 260, the electronic device may control (or perform) a cell release process for the RLC layer of the source DU. In an embodiment of the present disclosure, the electronic device may release the target cell from the RLC layer of the source DU. For example, the electronic device may remove (or release) RLC contexts for the target cell, which are included (or configured or stored) in the RLC layer of the source DU. For example, the electronic device may remove (or release) configuration information or contexts for the target cell, which are included (or configured or stored) in the RLC layer of the source DU. For example, the electronic device may remove (or release) configuration information or contexts for a plurality of UEs associated with the target cell, which are included (or configured or stored) in the RLC layer of the source DU.

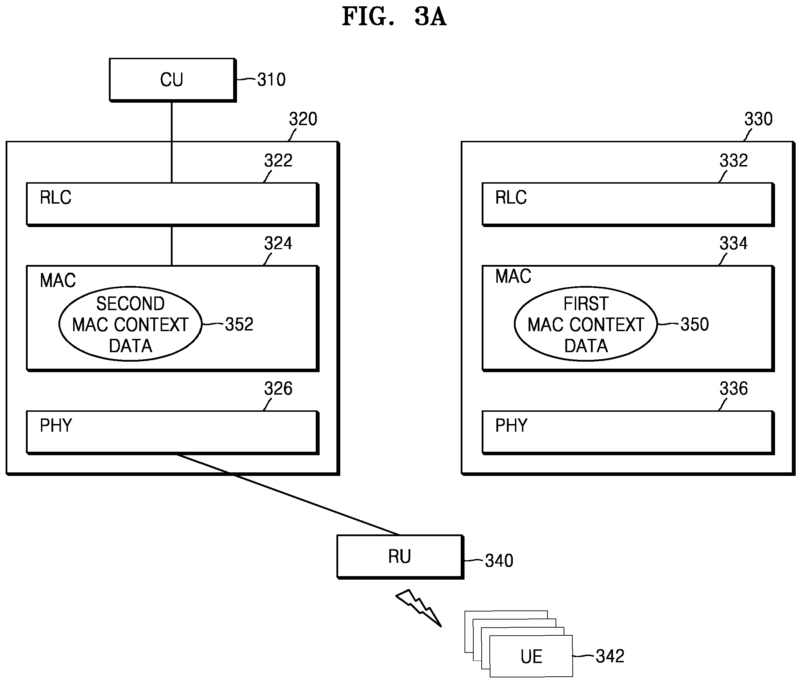

FIG. 3A is a diagram illustrating an example of a source DU and a target DU before migration of MAC contexts from the source DU to the target DU, according to an embodiment of the present disclosure.

In describing FIG. 3A, redundant descriptions provided above with reference to FIG. 1 or 2 may be omitted.

FIG. 3A is a diagram illustrating an example of a RAN including a source DU and a target DU before performing switching of a fronthaul interface, switching of a control path (e.g., a path between the RLC layer and the MAC layer), and migration of MAC contexts, according to an embodiment of the present disclosure. For example, FIG. 3A may illustrate the paths and the MAC contexts for the target cell in a state before operation 230 of FIG. 2 described above.

Referring to FIG. 3A, an RU 340 for the target cell may be connected to a source DU 320 via a fronthaul interface, and the source DU 320 may be connected to a CU 310 via a midhaul interface. For example, the RU 340 and the source DU 320 may transmit and receive data for the target cell through the fronthaul interface. For example, the source DU 320 and the CU 310 may transmit and receive data for the target cell through the midhaul interface. Thus, by wirelessly communicating with the RU 340 for the target cell, a plurality of UEs 342 associated with the target cell may access the core network through the RU 340, the source DU 320, and the CU 310 and receive a wireless communication service.

Referring to FIG. 3A, first data 350 of MAC contexts for the target cell may be included (or configured or stored) in a MAC layer 334 of a target DU 330. For example, the first data 350 of the MAC contexts for the target cell may include the data migrated in operation 210 or 220 of FIG. 2 described above. For example, the first data 350 of the MAC contexts for the target cell may include the cell configuration information for the target cell (or the contexts for the target cell) migrated in operation 210 of FIG. 2 described above, or the UE contexts for the plurality of UEs (or configuration information for the plurality of UEs) associated with the target cell migrated in operation 220 of FIG. 2 described above.

For example, operation 210 or 220 of FIG. 2 described above may be performed without interrupting the MAC scheduling of the source DU 320. For example, the first data 350 of the MAC contexts included in the target DU 330 may be data that was migrated (or replicated) from the source DU 320 while the MAC scheduling of the source DU 320 was not interrupted. Thus, even after operation 210 or 220 of FIG. 2 described above, data of a new MAC context may be generated, data of an existing MAC context may be updated (or changed), or additional data of an existing MAC context may be accumulated or updated (or changed) by a MAC scheduling operation of the source DU 320.

Referring to FIG. 3A, second data 352 of MAC contexts for the target cell may be included (or configured or stored) in a MAC layer 324 of the source DU 320. In an embodiment of the present disclosure, the second data 352 of the MAC contexts for the target cell included in the source DU 320 may include data that has been updated (or changed) or accumulated for the same MAC context as at least one MAC context included in the target DU 330. For example, the second data 352 of the MAC contexts may include MAC context data of the source DU 320 that has not been migrated to the target DU 330. For example, the first data 350 included in the target DU 330 may include UE RNTI information of a first UE at a first point in time, and the second data 352 included in the source DU 320 may include UE RNTI information of the first UE at a second point in time that is subsequent to the first point in time (e.g., updated UE RNTI information).

In an embodiment of the present disclosure, the second data 352 of the MAC contexts for the target cell included in the source DU 320 may include data of a new MAC context that is not included in the target DU 330. For example, the second data 352 of the MAC contexts for the target cell included in the source DU 320 may include UE RNTI information of a second UE that is not included in the target DU 330.

In an embodiment of the present disclosure, at least a part of the second data 352 of the MAC contexts for the target cell included in the source DU 320 may also be identically included in the target DU 330. For example, for at least one MAC context that has not been updated (or changed) after operation 210 or 220 of FIG. 2 described above, the same data (e.g., a value) may be configured (or stored or included) in the source DU 320 and the target DU 330. For example, at least a part of the second data 352 of the MAC contexts for the target cell may be identical to at least a part of the first data 350 of the MAC contexts for the target cell. For example, the UE RNTI information of the first UE at the first point in time, which is included in the target DU 330, and the UE RNTI information of the first UE at the second point in time that is subsequent to the first point in time, which is included in the source DU 320, may be identical to each other.

In an embodiment of the present disclosure, the electronic device may interrupt MAC scheduling for the target cell in order to switch a fronthaul interface, switch a control path, or migrate a MAC context. For example, the electronic device may interrupt MAC scheduling of the source DU 320 for the target cell. For example, the electronic device may perform switching of a fronthaul interface, the switching of a control path, or migration of a MAC context while MAC scheduling for the target cell is interrupted. Referring to FIG. 3A, the second data 352 of the MAC contexts may include data of MAC contexts that has been generated, stored, obtained, determined, updated (or changed), or accumulated from after performing the operation of operation 210 or operation 220 of FIG. 2 described above until MAC scheduling of the source DU 320 for the target cell is interrupted.

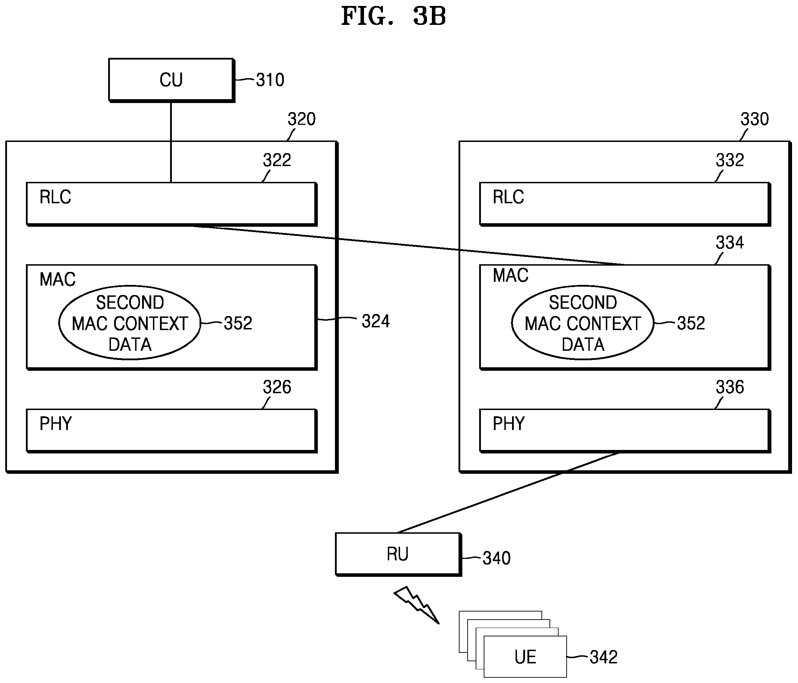

FIG. 3B is a diagram illustrating an example of a source DU and a target DU after migration of MAC contexts from the source DU to the target DU, according to an embodiment of the present disclosure.

In describing FIG. 3B, redundant descriptions provided above with reference to FIGS. 1 to 3A may be omitted.

FIG. 3B is a diagram illustrating an example of a RAN including a source DU and a target DU after performing switching of a fronthaul interface, switching of a control path (e.g., a path between the RLC layer and the MAC layer), and migration of MAC contexts, according to an embodiment of the present disclosure. For example, FIG. 3B may illustrate the paths and the MAC context for the target cell in a state after operation 230 of FIG. 2 described above.

In an embodiment of the present disclosure, the electronic device may migrate MAC contexts for the target cell from the source DU 320 to the target DU 330. For example, the MAC contexts for the target cell may include configuration information (or a context) for the target cell that is configured (or included or stored) in the MAC layer, or a context (or configuration information) for a plurality of UEs associated with the target cell. For example, the MAC contexts for the target cell may include information used for communication of a plurality of UEs associated with the target cell or information that is generated (or updated or determined) by communication of the plurality of UEs. Referring to FIG. 3B, the electronic device may migrate the second data 352 of the MAC contexts for the target cell, which are included in the source DU 320, to the target DU 330.

In an embodiment of the present disclosure, the electronic device may generate (or configure or store) the second data 352 of the MAC contexts for the target cell in the MAC layer 334 of the target DU 330 by using parameters that were used to generate (or configure or store) the second data 352 of the MAC contexts for the target cell in the MAC layer 324 of the source DU 320. In an embodiment of the present disclosure, the electronic device may directly copy (or replicate) the second data 352 of the MAC contexts for the target cell, which is included in the MAC layer 324 of the source DU 320, to the MAC layer 334 of the target DU 330. For example, the electronic device may control the source DU 320 to copy (or replicate) the second data 352 of the MAC contexts for the target cell and provide it to the MAC layer 334 of the target DU 330. For example, the second data 352 of the MAC contexts for the target cell may be copied or replicated from the source DU 320 to the target DU 330 through an inter-DU interface. For example, the electronic device may obtain the second data 352 of the MAC contexts for the target cell from the source DU 320 and provide it to the MAC layer 334 of the target DU 330.

In an embodiment of the present disclosure, the electronic device may switch the fronthaul interface from the source DU 320 to the target DU 330. For example, the electronic device may release (or disconnect, remove, or deactivate) the fronthaul interface between the RU 340 of the target cell and a PHY layer 326 of the source DU 320, and configure (or connect, generate, or activate) the fronthaul interface between the RU 340 of the target cell and a PHY layer 336 of the target DU 330.

In an embodiment of the present disclosure, the electronic device may switch a control path (e.g., a control path for the MAC layer or a control path for the PHY layer) from the source DU 320 to the target DU 330. For example, the electronic device may switch the path (or connection or interface) between the RLC layer and the MAC layer for the target cell, from a path between an RLC layer 322 of the source DU 320 and the MAC layer 324 of the source DU 320 to a path between the RLC layer 322 of the source DU 320 and the MAC layer 334 of the target DU 330. For example, for the target cell, the electronic device may release (or disconnect, remove, or deactivate) the path between the RLC layer 322 of the source DU 320 and the MAC layer 324 of the source DU 320, and configure (or establish, generate, or activate) the path between the RLC layer 322 of the source DU 320 and the MAC layer 334 of the target DU 330.

For example, at least some of migration of a MAC context, switching of a fronthaul interface, or switching of a control path (e.g., the path between the RLC layer and the MAC layer) may be performed while MAC scheduling for the target cell is interrupted. For example, at least some of migration of a MAC context, switching of a fronthaul interface, or switching of a control path may be performed simultaneously. For example, at least some of migration of a MAC context, switching of a fronthaul interface, or switching of a control path may be performed in parallel. For example, at least some of migration of a MAC context, switching of a fronthaul interface, or switching of a control path may be performed sequentially.

Referring to FIG. 3B, as the MAC contexts are migrated from the source DU 320 to the target DU 330, the second data 352 of the MAC contexts for the target cell may be included (or configured or migrated) in the MAC layer 334 of the target DU 330. For example, in the target DU 330, at least one MAC context for the target cell may be configured, updated, or synchronized with the migrated data (e.g., the second data 352). As illustrated in FIG. 3B, a fronthaul interface may be configured (or connected, generated, or activated) between the RU 340 of the target cell and the PHY layer 336 of the target DU 330, and a path between the RLC layer 322 of the source DU 320 and the MAC layer 334 of the target DU 330 may be configured (or connected, generated, or activated).

In an embodiment of the present disclosure, after at least one of the switching of the fronthaul interface, the switching of the control path, or the migration of the MAC context is processed, MAC scheduling of the target DU 330 for the target cell may be initiated. As MAC scheduling of the target DU 330 for the target cell is initiated, the RU 340 of the target cell and the PHY layer 336 of the target DU 330 may transmit and receive data for the target cell, and the RLC layer 322 of the source DU 320 and the MAC layer 334 of the target DU 330 may transmit and receive data for the target cell. Data for communication of the plurality of UEs 342 associated with the target cell may be processed by the PHY layer 336 and the MAC layer 334 of the target DU 330 and the RLC layer 322 of the source DU 320. Thus, by wirelessly communicating with the RU 340 for the target cell, the plurality of UEs 342 associated with the target cell may access the core network through the RU 340, the PHY layer 336 and the MAC layer 334 of the target DU 330, the RLC layer 322 of the source DU 320, and the CU 310, and receive a wireless communication service.

FIG. 3B illustrates an example in which all of the second data 352 of the MAC contexts for the target cell included in the source DU 320 are migrated to the target DU 330, but the present disclosure is not limited thereto. For example, a part of the second data 352 of the MAC contexts for the target cell included in the source DU 320 may be migrated to the target DU 330, and a part of the first data 350 of the MAC contexts for the target cell included in the target DU 330 may remain. For example, when migrating, to the target DU 330, the second data of a MAC context to be migrated from among the MAC contexts for the target cell included in the source DU 320, the data of the MAC context to be migrated, which is included in the target DU 330, may be updated with the second data (e.g., the migrated data), and for the other MAC contexts in the target DU 330, the first data (e.g., the existing data) may remain. For example, when the value of a particular UE context for a first UE is migrated and the value of a particular UE context for a second UE is not migrated, the value of the particular UE context for the first UE in the target DU 330 is updated with the migrated value, and the value of the particular context for the second UE in the target DU 330 may be remain unchanged.

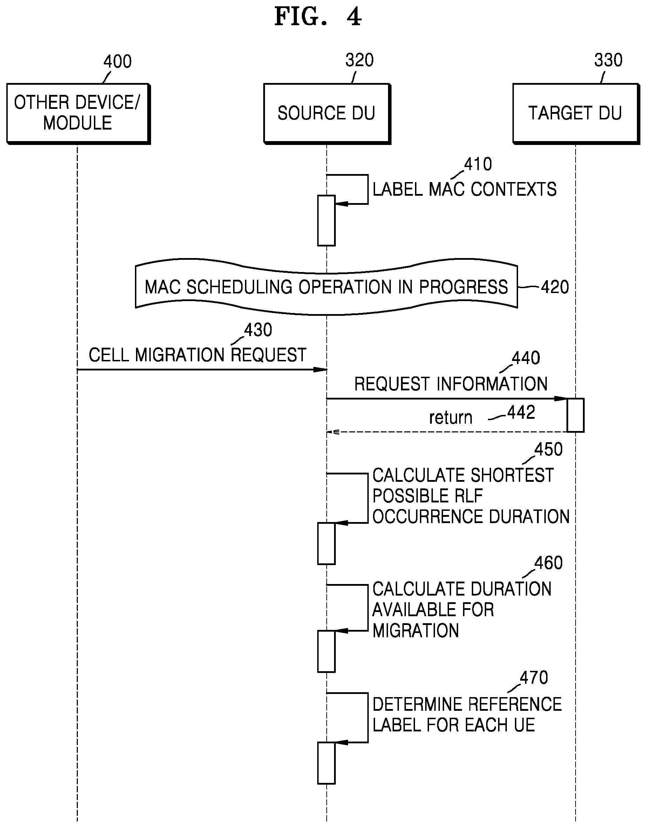

FIG. 4 is a diagram illustrating an example of determining a reference label for each UE for migrating MAC contexts from a source DU to a target DU, according to an embodiment of the present disclosure.

In describing FIG. 4, redundant descriptions provided above with reference to any one of FIGS. 1 to 3B may be omitted.

In an embodiment of the present disclosure, the electronic device may migrate a target cell from the source DU 320 to the target DU 330. For the migration of the target cell, the electronic device may migrate MAC contexts for the target cell from the source DU 320 to the target DU 330. For example, for the migration of the target cell, the electronic device may migrate, transmit, or replicate the MAC contexts from the MAC layer of the source DU 320 to the MAC layer of the target DU 330.

In an embodiment of the present disclosure, the electronic device that migrates MAC contexts may include a device including (or having configured therein) the source DU 320, a device including (or having configured therein) the target DU 330, or a device separate from the source DU 320 and the target DU 330. For example, the electronic device may include a device that is separate from the source DU 320 and the target DU 330 and controls migration of the target cell or migration of the MAC contexts from the source DU 320 to the target DU 330.

In an embodiment of the present disclosure, the electronic device may set a label for each of a plurality of MAC contexts. For example, the electronic device may label the plurality of MAC contexts by type. For example, the electronic device may label each of the plurality of MAC contexts with at least one of a plurality of labels. For example, the electronic device may group the plurality of MAC contexts into a plurality of groups and assign a label to each group. For example, the electronic device may set which label, from among a plurality of labels, each of various MAC contexts corresponds to.

In an embodiment of the present disclosure, the electronic device may label the plurality of MAC contexts based on their influence on UE traffic. For example, the electronic device may classify each MAC context with at least one label based on the influence that the presence or absence of the data of the MAC context has on communication of a UE. In an embodiment of the present disclosure, the electronic device may label each MAC context based on the influence or importance of the MAC context in a MAC scheduling process.

In an embodiment of the present disclosure, the electronic device may obtain information about labels respectively corresponding to (or matching) the plurality of MAC contexts (e.g., labeling information), and set or assign a label for each MAC context. For example, the electronic device may set a predefined label for each of the plurality of MAC contexts. For example, the label set for each MAC context may be defined or determined according to an importance based on the influence that the presence or absence of the corresponding MAC context has on UE traffic.

For example, the electronic device may set a label for each MAC context as shown in Table 1 below, but the present disclosure is not limited thereto.

[Table 1]

| Label | Example of MAC context |
|---|---|
| Label 3 | Slot configuration, etc. |
| Label 2 | UE RNTI, attach information, etc. |
| Label 1 | Buffer occupancy (BO) information, buffer status report (BSR) information, hybrid automatic repeat request (HARQ) information, scheduling information of a previous slot, etc. |
| Label 0 | System time, statistical data, etc. |

<Table 1 - Labeling Information>

In Table 1 above, Label 3 may correspond to contexts that, when not migrated, may cause a malfunction in the communication system for the target cell. Label 2 may correspond to contexts that, when not migrated, may cause an RLF in an associated UE although the communication system for the target cell may operate normally. Label 1 may correspond to contexts that, when not migrated, may cause a throughput degradation, i.e., a performance degradation, in an associated UE although the communication system for the target cell may operate normally. Label 0 may correspond to contexts that are updated on a per-slot basis and thus do not need to be migrated.

Table 1 above illustrates an example in which a higher label value corresponds to MAC contexts with a higher importance, but the present disclosure is not limited thereto.

In an embodiment of the present disclosure, the electronic device may identify a permissible degree of RLF occurrence. For example, the electronic device may obtain or determine the permissible degree of RLF occurrence. For example, the electronic device may receive, from another device or module 400, information indicating the permissible degree of RLF occurrence. For example, the electronic device may obtain the permissible degree of RLF occurrence, which is input through an input device connected to or embedded in the electronic device.

In an embodiment of the present disclosure, the permissible degree of RLF occurrence may include information indicating an acceptable level of RLFs during a process of migrating a target cell (e.g., a process of migrating MAC contexts). For example, the permissible degree of RLF occurrence may include a permissible degree of RLF occurring in UEs associated with the target cell. For example, the permissible degree of RLF occurrence may include a maximum permissible degree of RLF occurrence that is used in an RLF occurrence condition. For example, the permissible degree of RLF occurrence may include a maximum permissible degree of RLF occurrence during MAC context migration. For example, the permissible degree of RLF occurrence may include at least one of a permissible RLF occurrence rate, a permissible number of RLF occurrences, or a permissible number of UEs experiencing RLF.

In an embodiment of the present disclosure, the electronic device may identify information about the target DU 330 and/or information about the source DU 320. For example, the electronic device may obtain information about the target DU 330 and/or information about the source DU 320. For example, the electronic device may obtain information about the target DU 330 and/or information about the source DU 320, which is input through an input device connected to or embedded in the electronic device. For example, the electronic device may receive, from the other device or module 400, information about the target DU 330 and/or information about the source DU 320. For example, the electronic device may request, from the other device or module 400, information about the target DU 330 and/or information about the source DU 320, and receive, from the other device or module 400, the information about the target DU 330 and/or the information about the source DU 320.

In an embodiment of the present disclosure, the information about the target DU 330 may include information used to predict, determine, or calculate a maximum transmittable data size (or amount) between the source DU 320 (e.g., the MAC layer of the source DU) and the target DU 330 (e.g., the MAC layer of the target DU) during a particular period. In an embodiment of the present disclosure, the information about the target DU 330 may include information about communication of the target DU 330 (e.g., network information or frequency resource information). For example, the information about the target DU 330 may include frequency resource information of a network interface card (NIC) used for MAC context migration. In an embodiment of the present disclosure, the information about the target DU 330 may include performance information of the target DU 330 (e.g., processing capacity information). For example, the information about the target DU 330 may include processing capacity information for MAC context migration read/write operations.

In an embodiment of the present disclosure, the information about the source DU 320 may include information used to predict, determine, or calculate a maximum transmittable data size (or amount) between the source DU 320 (e.g., the MAC layer of the source DU) and the target DU 330 (e.g., the MAC layer of the target DU) during a particular period. In an embodiment of the present disclosure, the information about the source DU 320 may include information about communication of the source DU 320 (e.g., network information or frequency resource information). For example, the information about the source DU 320 may include frequency resource information of an NIC used for the MAC context migration. In an embodiment of the present disclosure, the information about the source DU 320 may include performance information of the source DU 320 (e.g., processing capacity information). For example, the information about the source DU 320 may include processing capacity information for MAC context migration read/write operations.

In an embodiment of the present disclosure, the electronic device may determine (or predict or calculate), based on information about a plurality of UEs associated with a target cell, the shortest duration in which an RLF associated with the MAC layer may occur in the target cell. For example, the electronic device may determine the shortest duration in which an RLF may occur in the target cell during MAC context migration. For example, because UEs in an RRC idle state are not affected by RLF occurrence, the electronic device may predict a shortest possible duration for an RLF to occur, based on the UEs, from among the plurality of UEs associated with the target cell, whose RRC state is not the RRC idle state. For example, the electronic device may calculate a possible RLF occurrence duration for each of a plurality of UEs associated with the target cell (e.g., UEs in an RRC inactive state or an RRC active state), and determine the shortest duration among the calculated possible RLF occurrence durations for the plurality of UEs, as the shortest possible RLF occurrence duration for the target cell.

In an embodiment of the present disclosure, the electronic device may determine (or predict or calculate) the shortest possible RLF occurrence duration for the target cell by considering possible RLF occurrence scenarios associated with the MAC layer (e.g., possible RLF occurrence scenarios associated with MAC context migration). For example, the electronic device may determine the shortest possible RLF occurrence duration for the target cell, based on the possible RLF occurrence durations calculated for the plurality of UEs associated with the target cell (e.g., UEs in an RRC inactive state or an RRC active state) in each scenario. For example, the electronic device may determine the smallest value among the predicted possible RLF occurrence durations for the plurality of UEs associated with the target cell in each scenario, as the shortest possible RLF occurrence duration for the target cell.

For example, possible RLF occurrence scenarios during MAC context migration may include random-access channel (RACH) failure scenarios or RLC failure scenarios. The RACH failure scenarios may include a scenario in which a UE in an RRC idle state or an RRC inactive state receives a paging message, attempts a RACH in a process of changing to an RRC connected (or active) state, and experiences an RLF because it fails to receive a random-access response (RAR) message within a particular time. The RLC failure scenarios may include an acknowledge mode (AM) data radio bearer (DRB) max retransmission exceeded scenario in which an RLF occurs for a UE that is in an RRC connected state and is performing RLC AM mode transmission.

For example, the electronic device may calculate possible RLF occurrence durations for the plurality of UEs associated with the target cell in a RACH failure scenario. For example, the electronic device may calculate the possible RLF occurrence duration for each of the plurality of UEs in a RACH failure scenario by using Equation 1 below.

Equation 1 Possible DL RLF occurrence duration = Scheduling request (SR) period * sr-TransMax + PRACH period * preambleTransMax Possible UP RLF occurrence duration = retxBSR trigger + SR period* sr-TransMax(64) + PRACH period * preambleTransMax(10)          Equation 1

In Equation 1 above, SR period may denote a scheduling request period, sr-TransMax may denote the maximum number of scheduling request transmissions, and preambleTransMax may denote the maximum number of preamble transmissions. In addition, retxBSR trigger may denote a parameter that sets a trigger for retransmitting a buffer status report, sr-TransMax(64) may indicate that sr-TransMax is set to 64, and preambleTransMax(10) may indicate that preambleTransMax is set to 10. The parameter values of Equation 1 above may be different for each of a plurality of UEs or may be common to the plurality of UEs.

For example, in an RLC failure scenario, the electronic device may calculate possible RLF occurrence durations for a plurality of UEs associated with the target cell. For example, the electronic device may calculate the possible RLF occurrence duration for each of the plurality of UEs in an RLC failure scenario by using Equation 2 below.

Equation 2 Possible DL or UL RLF occurrence duration = t-PollRetransmit * maxRetxThreshold          Equation 2

In Equation 2 above, t-PollRetransmit may denote a time interval at which a UE polls the network, and maxRetxThreshold may denote the maximum number of retransmissions allowed in a HARQ process. The parameter values of Equation 2 above may be different for each of a plurality of UEs or may be common to the plurality of UEs.

In an embodiment of the present disclosure, parameters (e.g., RRC parameters) used to calculate the possible RLF occurrence duration for each of a plurality of UEs may be delivered to the MAC layer (e.g., the MAC layer of the DU associated with the target cell) during a UE setup or UE modify process. For example, the parameters used to calculate the possible RLF occurrence duration may be included in a context that is managed on a per-UE basis. In an embodiment of the present disclosure, the parameters used to calculate the possible RLF occurrence duration for each of a plurality of UEs may be changed during base station operation or may be set differently for each UE. In an embodiment of the present disclosure, because the RRC parameter values that determine RLF occurrence may differ by service provider or by UE, the possible RLF occurrence duration (or the shortest possible RLF occurrence duration) may be predicted based on the RRC parameters at the time of operation rather than using fixed values.

In an embodiment of the present disclosure, the electronic device may determine a permissible MAC scheduling interruption duration based on the shortest possible RLF occurrence duration in the target cell. For example, the MAC scheduling interruption duration may include a duration of N slots, i.e., a duration in units of slots. The duration corresponding to one slot may vary depending on the value of the subcarrier spacing (SCS) (e.g., 15, 30, 60, 120, or 240). For example, to minimize the RLF occurrence probability, interruption of MAC scheduling of the source DU 320, migration of MAC contexts, and initiation of MAC scheduling of the target DU 330 may need to be performed within the permissible MAC scheduling interruption duration, i.e., within N slots.

In an embodiment of the present disclosure, based on the permissible MAC scheduling interruption duration and the information about the target DU 330, the electronic device may predict (or determine or calculate) a maximum transmittable data amount (or size) between the source DU 320 and the target DU 330. For example, the electronic device may predict a duration available for MAC context migration by considering the permissible MAC scheduling interruption duration and a duration required for the interruption of MAC scheduling of the source DU 320 and/or the initiation of MAC scheduling of the target DU 330. For example, the electronic device may predict a maximum transmittable data size between the source DU 320 and the target DU 330, based on the duration available for MAC context migration and the information about the target DU 330.

For example, the electronic device may predict a transmittable data size (or amount) between the source DU 320 and the target DU 330 during a particular time by using the information about the target DU 330, and predict a maximum transmittable data size between the source DU 320 and the target DU 330 during MAC context migration by using the permissible MAC scheduling interruption duration (or the duration available for MAC context migration). For example, the electronic device may predict, calculate, or determine the amount of MAC context data that may be migrated from the source DU 320 to the target DU 330 while MAC scheduling is interrupted.

In an embodiment of the present disclosure, the electronic device may predict or determine whether all MAC contexts for the target cell may be migrated from the source DU 320 to the target DU 330 within the permissible MAC scheduling interruption duration (or the duration available for MAC context migration). For example, the electronic device may predict or determine whether interruption of MAC scheduling of the source DU 320, migration of all MAC contexts for the target cell, and initiation of MAC scheduling of the target DU 330 may be performed within the permissible MAC scheduling interruption duration.

In an embodiment of the present disclosure, the electronic device may determine whether the data size of the MAC contexts for the target cell is greater than the maximum transmittable data size. For example, the MAC contexts for the target cell may include contexts configured for the target cell in the MAC layer of the source DU 320. For example, the MAC contexts for the target cell may include MAC contexts that need to be migrated to the target DU 330 for the migration of the target cell. For example, the MAC contexts for the target cell may include MAC contexts that have not been migrated to the target DU 330. For example, the MAC contexts for the target cell may include MAC contexts that have been newly generated, accumulated, or updated (or changed) after cell configuration information or UE contexts for the target cell had been migrated to the target DU 330. For example, the MAC contexts for the target cell may include MAC contexts for each of a plurality of UEs associated with the target cell.

In an embodiment of the present disclosure, when it is determined that all MAC contexts to be migrated for the target cell may be migrated within the permissible MAC scheduling interruption duration (or the duration available for MAC context migration), the electronic device may migrate all MAC contexts for the target cell from the source DU 320 to the target DU 330 to minimize the impact caused by the migration. In an embodiment of the present disclosure, when it is determined that the data size of the MAC contexts for the target cell is not greater than the maximum transmittable data size, the electronic device may migrate all MAC contexts for the target cell from the source DU 320 to the target DU 330. For example, the electronic device may migrate the MAC contexts with all labels from the source DU 320 to the target DU 330, regardless of the label to which each MAC context for the target cell corresponds.

In an embodiment of the present disclosure, when it is determined that not all MAC contexts for the target cell may be migrated within the permissible MAC scheduling interruption duration (or the duration available for MAC context migration), the electronic device may determine priorities of one or more UEs (e.g., UEs in an RRC active state) among the plurality of UEs associated with the target cell in order to select (or determine) some of the MAC contexts for the target cell as MAC contexts to be migrated. In an embodiment of the present disclosure, when it is determined that the data size of the MAC contexts for the target cell is greater than the maximum transmittable data size, the electronic device may determine priorities of one or more UEs among the plurality of UEs associated with the target cell in order to select (or determine) some of the MAC contexts for the target cell as MAC contexts to be migrated.

In an embodiment of the present disclosure, the electronic device may determine priorities of one or more UEs based on at least one of RRC state information of the plurality of UEs associated with the target cell or traffic information of the one or more UEs. For example, the electronic device may group the plurality of UEs based on their RRC states. For example, the electronic device may classify each of the plurality of UEs into one of an RRC idle state group, an RRC inactive state group, or an RRC active state group. For example, the electronic device may determine the priorities of UEs included in the RRC idle state group to be lower than the priorities of UEs included in the RRC inactive state group or the RRC active state group. For example, the electronic device may determine the priorities of UEs included in the RRC inactive state group to be lower than the priorities of UEs included in the RRC active state group.

For example, based on RRC state information of the plurality of UEs, the electronic device may identify one or more UEs that are in the RRC active state (e.g., UEs included in the RRC active state group), and determine priorities of the identified one or more UEs based on traffic information of the identified one or more UEs (e.g., bearer QoS, recent DL/UL throughput, or BO/BSR information). For example, the electronic device may determine the priorities of the UEs in the RRC active state group based on UE traffic information within the RRC active state group. For example, the electronic device may assign a higher priority to a UE that is more affected by a service interruption time.

In an embodiment of the present disclosure, to select MAC contexts to be migrated from among those for the target cell, the electronic device may determine a reference label for each of the plurality of UEs associated with the target cell. In an embodiment of the present disclosure, the electronic device may determine priorities of one or more UEs among the plurality of UEs associated with the target cell, and determine a reference label for each of the plurality of UEs based on the determined priorities of the one or more UEs. The reference label for a particular UE may indicate the label with the lowest importance among the contexts to be migrated from among the MAC contexts for the particular UE. Thus, during MAC context migration, from among MAC contexts for a particular UE included in the source DU 320, MAC contexts corresponding to the reference label for the specific UE or MAC contexts corresponding to labels indicating an importance greater than or equal to that of the reference label may be selected (or determined) as MAC contexts to be migrated.

In an embodiment of the present disclosure, the electronic device may determine or adjust reference labels for one or more UEs among the plurality of UEs associated with the target cell, such that more MAC contexts may be migrated for a UE with a higher priority than for a UE with a lower priority. For example, the electronic device may determine reference labels for one or more UEs that are in the RRC active state, based on the priorities of the one or more UEs. For example, the reference labels for the one or more UEs may be determined by increasing the reference label for a second UE in the RRC active state that has a lower priority than that of a first UE in the RRC active state. For example, the importance of the reference label for the second UE having a lower priority than that of the first UE may be higher than the importance of the reference label for the first UE.

For example, for a UE in the RRC active state that has a low priority, the electronic device may determine (or adjust) a label corresponding to a high importance, as the reference label. In this case, for the corresponding UE, an RLF may occur because MAC contexts with a label corresponding to an importance lower than that of the reference label have not been migrated; however, when the degree of RLF occurrence for the entire target cell is not greater than the permissible degree of RLF occurrence, the electronic device may assign (or set) a label corresponding to a high importance as the reference label to the UE in the RRC active state with the low priority, for the migration of the target cell.

In an embodiment of the present disclosure, the electronic device may determine a reference label for at least one UE among the plurality of UEs, based on RRC state information of the at least one UE. For example, the electronic device may determine the reference label for a UE in the RRC idle state, as a label predefined for the RRC idle state. For example, for a UE in the RRC idle state (e.g., a UE included in the RRC idle state group), the electronic device may determine the reference label as a predefined highest-level label (e.g., label 3) for the RRC idle state such that a malfunction does not occur. For example, the electronic device may determine the reference label for a UE in the RRC inactive state, as a label predefined for the RRC inactive state. For example, for a UE in the RRC inactive state (e.g., a UE included in the RRC inactive state group), the electronic device may determine the reference label as a predefined label (e.g., label 2) for the RRC inactive state such that a malfunction does not occur and a contention free based random access (CFRA) process may be performed.

In an embodiment of the present disclosure, the electronic device may determine reference labels for a plurality of UEs, wherein the reference labels satisfy an RLF occurrence condition or a data size condition. For example, to determine the reference labels for the plurality of UEs, the electronic device may determine, through a loop operation, whether a condition for RLF occurrence or a condition for data size is satisfied in various cases. For example, the condition for RLF occurrence may include a condition that a predicted degree of RLF occurrence is not greater than the permissible degree of RLF occurrence. For example, the condition for data size may include a condition that the data size of the MAC contexts to be migrated is not greater than the maximum transmittable data size. For example, the condition for data size may include a condition that the MAC contexts to be migrated may be migrated within the permissible MAC scheduling interruption duration (or the duration available for MAC context migration). In an embodiment of the present disclosure, the electronic device may determine the reference labels for the plurality of UEs, wherein the reference labels minimize the predicted degree of RLF occurrence while satisfying the condition for RLF occurrence or the condition for data size.

In an embodiment of the present disclosure, the electronic device may determine the reference label for each of the plurality of UEs associated with the target cell such that the predicted degree of RLF occurrence is not greater than the permissible degree of RLF occurrence, and the data size of the MAC contexts to be migrated is not greater than the maximum transmittable data size. For example, the electronic device may determine the reference label for each UE by iteratively adjusting (or updating) the reference labels for at least some of the plurality of UEs, such that the predicted degree of RLF occurrence is not greater than the permissible degree of RLF occurrence, and the amount of data of the MAC contexts to be migrated is not greater than exceed the maximum transmittable data amount.

In an embodiment of the present disclosure, the electronic device may determine the reference label for each of the plurality of UEs associated with the target cell, such that the predicted degree of RLF occurrence is not greater than the permissible degree of RLF occurrence, and such that MAC contexts to be migrated, which are migratable within the permissible MAC scheduling interruption duration (or the duration available for MAC context migration) may be selected. For example, the electronic device may determine the reference label for each UE by iteratively adjusting (or updating) the reference labels for at least some of the plurality of UEs, such that the predicted degree of RLF occurrence is not greater than the permissible degree of RLF occurrence, and such that MAC contexts to be migrated, which are migratable within the permissible MAC scheduling interruption duration (or the duration available for MAC context migration) may be selected.

Referring to FIG. 4, the source DU 320 may perform labeling 410 for each MAC context. For example, the source DU 320 may assign at least one of a plurality of labels to each MAC context at the time of initial execution of a MAC process. For example, the source DU 320 may set (or assign) a label for each MAC context according to labeling information defined based on importance.

The source DU 320 may perform a MAC scheduling operation 420 for the target cell. For example, the MAC layer of the source DU 320 may perform MAC scheduling for communication of the plurality of UEs associated with the target cell. For example, as a result of the MAC scheduling operation 420 for the target cell, data of at least one MAC context may be generated, accumulated, or updated (or changed) in the source DU 320.

The source DU 320 may receive a cell migration request 430 from the other device or module 400. For example, the source DU 320 may receive a message, a signal, or information for requesting (or instructing to perform) cell migration. For example, the source DU 320 may receive the cell migration request 430 from another module of the electronic device including the source DU 320. The cell migration request 430 may include at least one of information about a target DU to process the cell to be migrated (e.g., an identifier, a location, or hardware information of the target DU), information about the target cell to be migrated to the target DU (e.g., an identifier of the target cell), or information about a permissible degree of RLF occurrence (e.g., a permissible RLF occurrence rate).

In an embodiment of the present disclosure, the source DU 320 and the target DU 330 may exchange information used to predict the maximum transmittable data size between the source DU 320 (e.g., the MAC layer of the source DU) and the target DU 330 (e.g., the MAC layer of the target DU) during a particular period. For example, the source DU and the target DU may exchange network information, frequency band information, or processing capacity information for MAC context migration.

Referring to FIG. 4, the source DU 320 may request information about the target DU 330 from the target DU 330 (440), and obtain the information about the target DU 330 from the target DU 330. As illustrated in FIG. 4, the target DU 330 may transmit a return response 442 in response to receiving the request from the source DU 320. For example, the target DU 330 may provide the information about the target DU 330 to the source DU 320 together with the return response 442, before the return response 442, or after the return response 442.

The source DU 320 may calculate (or predict or determine) a shortest possible RLF occurrence duration for migration of MAC contexts for the target cell (450). For example, the source DU 320 may calculate a possible RLF occurrence duration for each of a plurality of UEs associated with the target cell, and determine the shortest duration among the calculated durations, as the shortest possible RLF occurrence duration for the target cell.

The source DU 320 may calculate a duration during which MAC context migration is possible (or the duration available for MAC context migration, or the available MAC scheduling interruption duration) according to the calculated shortest possible RLF occurrence duration (460). For example, by using the calculated shortest possible RLF occurrence duration, the source DU 320 may calculate (or determine) the number of slots available for MAC context migration (or for MAC scheduling interruption), i.e., a duration in units of slots. For example, the source DU 320 may calculate the duration during which MAC context migration is possible, by considering the calculated shortest possible RLF occurrence duration and a duration required for interruption of MAC scheduling of the source DU 320 and initiation of MAC scheduling of the target DU 330 (460).

When all MAC contexts for the target cell may be migrated within the duration available for MAC context migration (or the available MAC scheduling interruption duration), the source DU 320 may transmit (or migrate or replicate) data of all MAC contexts for the target cell to the target DU 330. For example, when migrating all MAC contexts for the target cell to the target DU 330 regardless of the label of each MAC context, the source DU 320 may collectively transmit (or migrate or replicate) the data of the MAC contexts for the target cell to the target DU 330 by using a memory dump method, without a process of getting/setting data of contexts with a particular label. For example, the source DU 320 may transmit memory area data of all MAC contexts for the target cell to the target DU 330, and the target DU 330 may copy the received MAC context data to a memory area of the target cell.

Referring to FIG. 4, when not all MAC contexts for the target cell may be migrated within the duration available for MAC context migration (or the available MAC scheduling interruption duration), the source DU 320 may determine a reference label for each of the plurality of UEs associated with the target cell to select MAC contexts to be migrated (470). For example, the source DU 320 may determine priorities of one or more UEs among the plurality of UEs and determine a reference label for each of the plurality of UEs based on the determined priorities. For example, a UE with a high priority may be assigned a reference label with a lower importance than a UE with a low priority.

FIG. 4 illustrates an example in which the source DU 320 receives the cell migration request 430, but the present disclosure is not limited thereto. In an embodiment of the present disclosure, the source DU 320 may determine cell migration. For example, the source DU 320 may receive a DU scaling (e.g., scaling-in or scaling-out) request and then determine cell migration. For example, the source DU 320 may determine DU scaling and then determine cell migration.

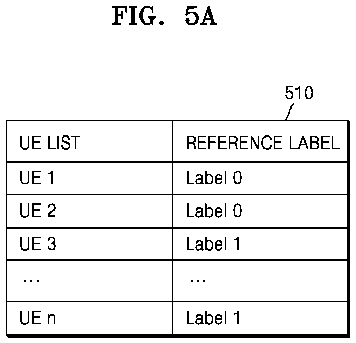

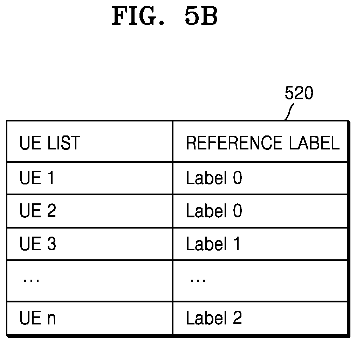

FIG. 5A is a diagram illustrating an example of determining reference labels for a plurality of UEs, according to an embodiment of the present disclosure. FIG. 5B is a diagram illustrating an example of determining reference labels for a plurality of UEs, according to an embodiment of the present disclosure.

In describing FIG. 5A or 5B, redundant descriptions provided above with reference to any one of FIGS. 1 to 4 may be omitted.

In an embodiment of the present disclosure, based on priorities of one or more UEs among a plurality of UEs associated with a target cell, the electronic device may determine reference labels for the one or more UEs. For example, the electronic device may determine the reference label for each of the plurality of UEs such that a predicted degree of RLF occurrence is not greater than a permissible degree of RLF occurrence, and such that migration of the MAC contexts to be migrated is completed within the duration available for MAC context migration (or the permissible MAC scheduling interruption duration). For example, the electronic device may determine the reference label for each of the plurality of UEs such that a predicted degree of RLF occurrence is not greater than the permissible degree of RLF occurrence, and such that the data size of the MAC contexts to be migrated is not greater than a maximum transmittable data size.

For example, the electronic device may determine the reference label for each of the plurality of UEs such that the data size of the MAC contexts to be migrated is not greater than the maximum transmittable data size, and such that RLF occurrence is minimized. For example, the electronic device may determine the reference label for each of the plurality of UEs such that the data size of the MAC contexts to be migrated is not greater than the maximum transmittable data size, and such that a communication performance (e.g., throughput) degradation for the target cell is minimized.

In an embodiment of the present disclosure, the electronic device may determine the reference label for each of the plurality of UEs by iteratively (or in a single instance) adjusting (or updating) the reference labels for at least some of the plurality of UEs. For example, the electronic device may obtain reference labels for the plurality of UEs that satisfy a condition for RLF occurrence and a condition for data size, by adjusting the reference labels for at least some of the plurality of UEs by using a predefined algorithm operation or a trained model. For example, the electronic device may obtain reference labels for the plurality of UEs that satisfy the condition for RLF occurrence and the condition for data size, by adjusting the reference labels for at least some of the plurality of UEs through an iterative loop operation.

In an embodiment of the present disclosure, the electronic device may obtain final reference labels for the plurality of UEs by adjusting the reference label for at least one of the plurality of UEs until the condition for RLF occurrence and the condition for data size are satisfied. For example, as an initial setting (or assumption), the electronic device may assign a label with a low importance as a reference label to one or more UEs in an RRC active state among the plurality of UEs, and preferentially increase the reference label for a UE with a lower priority from among the one or more UEs. For example, in an initial setting (or assumption) step, the electronic device may set (or determine or assign) the reference labels for one or more UEs in an RRC active state among the plurality of UEs to be a label predefined for the RRC active state, and preferentially increase the reference label for a UE with a lower priority from among the one or more UEs.

Referring to FIG. 5A, a UE list-reference label table 510 may represent the reference labels for n UEs in the initial setting (or assumption) step or the i-th (where i is a natural number) adjustment step. In the table 510, the n UEs may be listed sequentially from top to bottom in order of priority. For example, the UEs may be listed in order in the table 510 from UE 1 with the highest priority to UE n with the lowest priority. As shown in FIG. 5A, in the initial setting (or assumption) step or the i-th adjustment step, the reference labels for UE 1 and UE 2 may be Label 0, and the reference labels for UE 3 to UE n may be set (or assigned or assumed) as Label 1.

The electronic device may predict (or determine) whether the MAC context migration will be successful when the reference labels for UE 1 to UE n are set (or assigned or assumed) as shown in the table 510. For example, the electronic device may predict (or determine) that, when the reference labels for UE 1 to UE n are set (or assigned or assumed) as shown in the table 510, the predicted degree of RLF occurrence is not greater than the permissible degree of RLF occurrence, but the MAC contexts to be migrated cannot be migrated within the duration available for MAC context migration (or the permissible MAC scheduling interruption duration). For example, the electronic device may predict (or determine) that, when the reference labels for UE 1 to UE n are set (or assigned or assumed) as shown in the table 510, the predicted degree of RLF occurrence is not greater than the permissible degree of RLF occurrence, but the size of the MAC contexts to be migrated is greater than the maximum transmittable data size.

Accordingly, the electronic device may adjust the reference labels for at least some of the n UEs. Referring to FIG. 5B, a UE list-reference label table 520 may represent the reference labels for the n UEs in the first adjustment step or the (i+1)-th adjustment step. As shown in the table 520 of FIG. 5B, in the first adjustment step or the (i+1)-th adjustment step, the electronic device may adjust the reference label for UE n, which has a low priority, from Label 1 to Label 2. As the reference label for UE n is adjusted from Label 1 to Label 2, the MAC contexts for UE n corresponding to Label 1 may be excluded from the MAC contexts to be migrated.

The electronic device may predict (or determine) whether the MAC context migration will be successful when the reference labels for UE 1 to UE n are set (or assigned or assumed) as shown in the table 520. For example, the electronic device may predict (or determine) that, when the reference labels for UE 1 to UE n are set (or assigned or assumed) as shown in the table 520, the predicted degree of RLF occurrence is not greater than the permissible degree of RLF occurrence, and the MAC contexts to be migrated may be migrated within the duration available for MAC context migration (or the permissible MAC scheduling interruption duration). For example, the electronic device may predict (or determine) that, when the reference labels for UE 1 to UE n are set (or assigned or assumed) as shown in the table 520, the predicted degree of RLF occurrence is not greater than the permissible degree of RLF occurrence, and the size of the MAC contexts to be migrated is not greater than the maximum transmittable data size. Thus, the electronic device may finally determine the reference labels for the plurality of UEs as shown in the table 520.

The algorithm, parameters, reference values, operations, or model used in each adjustment step may be different or identical. FIG. 5B illustrates an example of determining reference labels for a plurality of UEs by increasing the reference label for a UE with a low priority, according to an embodiment of the present disclosure, but the present disclosure is not limited thereto. For example, the electronic device may determine the reference labels for the plurality of UEs by setting the reference labels for the UEs to be a label with a high importance in the initial setting step, and decreasing the reference label for a UE with a high priority.

For example, the UEs listed according to priority in the table 510 of FIG. 5A and the table 520 of FIG. 5B (e.g., UE 1, UE 2, ..., and UE n) may include UEs in an RRC active state, UEs in an RRC inactive state, or UEs in an RRC idle state. For example, the priorities of the UEs in the RRC inactive state may be set (or determined) to be lower than the priorities of the UE in the RRC active state, and higher than the priorities of the UEs in the RRC idle state. For example, the reference labels for the UEs in the RRC inactive state or the UEs in the RRC idle state may be determined to be labels predefined for the respective RRC states.

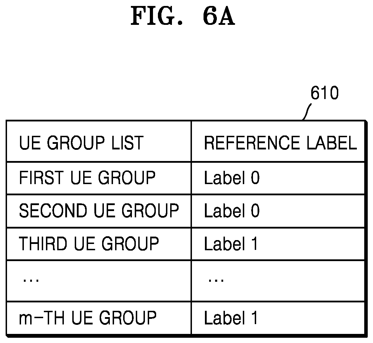

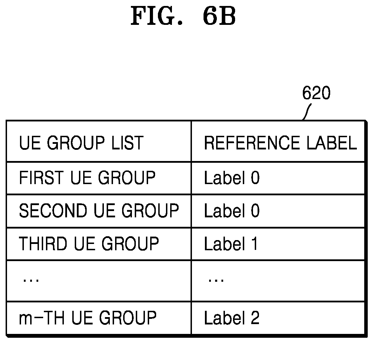

FIG. 6A is a diagram illustrating an example of determining reference labels for a plurality of UEs, according to an embodiment of the present disclosure. FIG. 6B is a diagram illustrating an example of determining reference labels for a plurality of UEs, according to an embodiment of the present disclosure.

In describing FIG. 6A or 6B, redundant descriptions provided above with reference to any one of FIGS. 1 to 5B may be omitted.

In an embodiment of the present disclosure, the electronic device may classify one or more UEs among a plurality of UEs associated with a target cell into a plurality of groups (e.g., m groups, where m is a natural number). For example, the electronic device the one or more UEs among the plurality of UEs may include UEs in an RRC active state. In an embodiment of the present disclosure, the electronic device may classify one or more UEs among the plurality of UEs associated with the target cell into a plurality of groups based on traffic information or priorities. For example, the electronic device may classify one or more UEs into a plurality of groups based on traffic information or priorities, according to the degree of impact caused by a service interruption time.

In an embodiment of the present disclosure, after determining the priorities of one or more UEs among the plurality of UEs associated with the target cell, the electronic device may classify the one or more UEs into a plurality of groups based on the priorities. For example, UEs whose priority is within the top x may be determined as a first UE group, and UEs whose priority is from x+1 to y may be determined as a second UE group. For example, UEs with the same priority may be classified into a single group. Regarding the priorities of the UE groups, a group including higher-priority UEs has a higher priority than a group including lower-priority UEs.

In an embodiment of the present disclosure, the electronic device may classify one or more UEs among the plurality of UEs associated with the target cell into a plurality of groups based on traffic information of the one or more UEs. For example, UEs included in the same group may correspond to the same priority. Based on the traffic information of the one or more UEs, the priority of a first UE group that is predicted to be greatly affected by a service interruption time may be higher than the priority of a second UE group that is predicted to be relatively less affected by the service interruption time.

In an embodiment of the present disclosure, by determining a reference label for each UE group, the electronic device may determine reference labels for one or more UEs among the plurality of UEs associated with the target cell. For example, by determining the reference label for each UE group, the electronic device may determine the reference labels for the UEs included in each UE group. For example, determining the reference label for a first UE group as Label 0 may include determining the reference labels for the UEs included in the first UE group as Label 0. For example, the same reference label may be determined (or set) for UEs included in the same UE group.

In an embodiment of the present disclosure, the electronic device may determine a reference label for each of a plurality of UE groups by iteratively (or in a single instance) adjusting (or updating) the reference labels for at least some of the plurality of UE groups. For example, the electronic device may obtain the reference labels for the plurality of UE groups that satisfy a condition for RLF occurrence and a condition for data size, by adjusting the reference labels for at least some of the plurality of UE groups by using a predefined algorithm operation or a trained model. For example, the electronic device may obtain the reference labels for the plurality of UE groups that satisfy the condition for RLF occurrence and the condition for data size, by adjusting the reference labels for at least some of the plurality of UE groups through an iterative loop operation.

In an embodiment of the present disclosure, the electronic device may obtain final reference labels for the plurality of UE groups by adjusting the reference label for at least one of the plurality of UE groups until the condition for RLF occurrence and the condition for data size are satisfied. For example, as an initial setting (or assumption), the electronic device may assign a label with a low importance as a reference label to the plurality of UE groups, and preferentially increase the reference label for a UE group with a lower priority. For example, in an initial setting (or assumption) step, the electronic device may set (or determine or assign) the reference labels for the plurality of UE groups to be a label predefined for the RRC state, and preferentially increase the reference label for a UE group with a lower priority.

Referring to FIG. 6A, a UE group list-reference label table 610 may represent reference labels for m UE groups in the initial setting (or assumption) step or the j-th (where j is a natural number) adjustment step. In the table 610, the m UE groups may be listed sequentially from top to bottom in order of priority. For example, the UE groups may be listed in order in the table 610 from a first UE group with the highest priority to an m-th UE group with the lowest priority. As shown in FIG. 6A, in the initial setting (or assumption) step or the j-th adjustment step, the reference labels for the first UE group and the second UE group may be Label 0, and the reference labels for the third UE group to the m-th UE group may be set (or assigned or assumed) as Label 1.

The electronic device may predict (or determine) whether the MAC context migration will be successful when the reference labels for the first UE group to the m-th UE group are set (or assigned or assumed) as shown in the table 610. For example, the electronic device may predict (or determine) that, when the reference labels for the first UE group to the m-th UE group are set (or assigned or assumed) as shown in the table 610, the predicted degree of RLF occurrence is not greater than the permissible degree of RLF occurrence, but the MAC contexts to be migrated cannot be migrated within the duration available for MAC context migration (or the permissible MAC scheduling interruption duration). For example, the electronic device may predict (or determine) that, when the reference labels for the first UE group to the m-th UE group are set (or assigned or assumed) as shown in the table 610, the predicted degree of RLF occurrence is not greater than the permissible degree of RLF occurrence, but the size of the MAC contexts to be migrated is greater than the maximum transmittable data size.

Accordingly, the electronic device may adjust the reference labels for at least some of the m UE groups. Referring to FIG. 6B, a UE group list-reference label table 620 may represent the reference labels for the m UE groups in the first adjustment step or the (j+1)-th adjustment step. As shown in the table 620 of FIG. 6B, in the first adjustment step or the (j+1)-th adjustment step, the electronic device may adjust the reference label for the m-th UE group, which has a low priority, from Label 1 to Label 2. As the reference label for the m-th UE group is adjusted from Label 1 to Label 2, the MAC contexts for the m-th UE group corresponding to Label 1 (e.g., the MAC contexts corresponding to Label 1 and for the UEs included in the m-th UE group) may be excluded from the MAC contexts to be migrated.

The electronic device may predict (or determine) whether the MAC context migration will be successful when the reference labels for the first UE group to the m-th UE group are set (or assigned or assumed) as shown in the table 620. For example, the electronic device may predict (or determine) that, when the reference labels for the first UE group to the m-th UE group are set (or assigned or assumed) as shown in the table 620, the predicted degree of RLF occurrence is not greater than the permissible degree of RLF occurrence, and the MAC contexts to be migrated may be migrated within the duration available for MAC context migration (or the permissible MAC scheduling interruption duration). For example, the electronic device may predict (or determine) that, when the reference labels for the first UE group to the m-th UE group are set (or assigned or assumed) as shown in the table 620, the predicted degree of RLF occurrence is not greater than the permissible degree of RLF occurrence, and the size of the MAC contexts to be migrated is not greater than the maximum transmittable data size. Thus, the electronic device may finally determine the reference labels for the plurality of UE groups as shown in the table 620.

For example, the algorithm, parameters, reference values, operations, or model used in each adjustment step may be different or identical. FIG. 6B illustrates an example of determining reference labels for a plurality of UE groups by increasing the reference label for a UE group with a low priority, according to an embodiment of the present disclosure, but the present disclosure is not limited thereto. For example, the electronic device may determine the reference labels for the plurality of UE groups by setting the reference labels for the UE groups to be a label with a high importance in the initial setting step, and decreasing the reference label for a UE group with a high priority.

For example, the UE groups listed according to priority in the table 610 of FIG. 6A and the table 620 of FIG. 6B (e.g., the first UE group, the second UE group, ..., and the m-th UE group) may include UEs in an RRC active state, UEs in an RRC inactive state, or UEs in an RRC idle state. For example, the priority of a UE group of UEs in the RRC inactive state may be set (or determined) to be lower than the priority of a UE group of UEs in the RRC active state, and higher than the priority of a UE group of UEs in the RRC idle state. For example, the reference label for the UE group of UEs in the RRC inactive state or the UE group of UEs in the RRC idle state may be determined to be a label predefined for the corresponding RRC state.

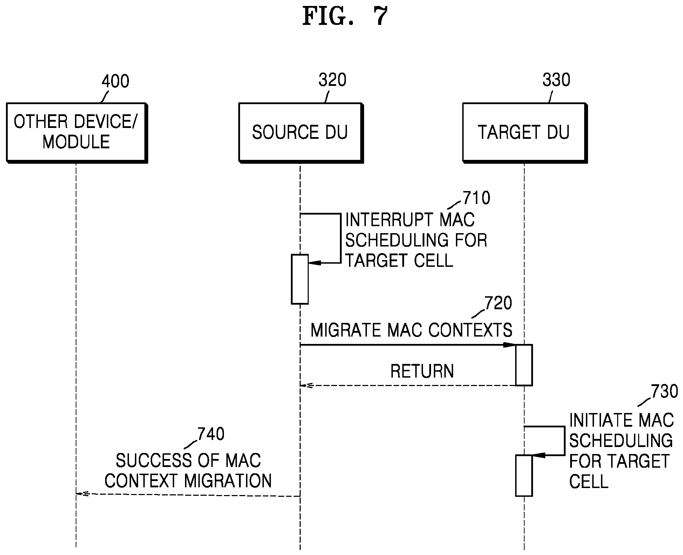

FIG. 7 is a diagram illustrating an example of migrating MAC contexts from a source DU to a target DU based on a label of each MAC context and a reference label for each UE, according to an embodiment of the present disclosure.

In describing FIG. 7, redundant descriptions provided above with reference to any one of FIGS. 1 to 6B may be omitted.

FIG. 7 may illustrate an example of identifying (or determining or selecting) MAC contexts to be migrated from among MAC contexts, and migrating the MAC contexts to be migrated from the source DU 320 to the target DU 330, based on a label of each MAC context and a reference label for each UE, according to an embodiment of the present disclosure.

In an embodiment of the present disclosure, to migrate at least a part of data of MAC contexts for a target cell included in the source DU 320, the electronic device may interrupt MAC scheduling of the source DU 320 for the target cell. Due to the interruption of MAC scheduling of the source DU 320 for the target cell, a communication service for a plurality of UEs associated with the target cell may be disconnected. For example, after the MAC scheduling of the source DU 320 for the target cell is interrupted, the communication service for the plurality of UEs associated with the target cell may be disconnected until the MAC scheduling for the target cell is resumed by the source DU 320 or the MAC scheduling for the target cell is initiated by the target DU 330.

To prevent the connection (or attachment) between the plurality of UEs and the target cell from being released (or interrupted) or to prevent a large number of RLFs from occurring in the target cell, it is necessary to resume the MAC scheduling for the target cell in the source DU 320 or to initiate MAC scheduling for the target cell in the target DU 330 within the permissible MAC scheduling interruption duration. For example, MAC contexts for the communication of the plurality of UEs need to be migrated to the target DU 330, and MAC scheduling of the target DU 330 for the target cell needs to be initiated, within the permissible MAC scheduling interruption duration.

Migrating all MAC contexts for the target cell may require more time than the permissible MAC scheduling interruption duration (or the duration available for MAC context migration). In this case, to minimize RLF occurrence in the target cell, the time during which MAC scheduling is interrupted is limited to within the permissible MAC scheduling interruption duration, and the electronic device may select at least some of the MAC contexts for the target cell as MAC contexts to be migrated during the MAC scheduling interruption duration. In this case, because some of the MAC contexts for the target cell are not migrated, an RLF may occur for some of the plurality of UEs associated with the target cell, but the RLF occurrence for the entire target cell may be minimized.

In an embodiment of the present disclosure, the electronic device may migrate at least a part of the data of the MAC contexts for the target cell from the source DU 320 to the target DU 330, based on the label set for each MAC context and the reference label determined for each UE. For example, the electronic device may identify (or determine or select) at least some of the MAC contexts for the target cell included in the source DU 320 as MAC contexts to be migrated, based on the label set for each MAC context and the reference label determined for each UE.

In an embodiment of the present disclosure, each of the MAC contexts for the target cell may correspond to at least one label according to the label set for each MAC context. For example, when a label is set (or assigned) for each MAC context based on the labeling information shown in Table 1 described above, the UE RNTI of a first UE and the UE RNTI of a second UE, which are included in the MAC contexts for the target cell, may correspond to Label 2.

In an embodiment of the present disclosure, the electronic device may identify (or determine or select), as MAC contexts to be migrated, MAC contexts for the first UE corresponding to at least one of a first reference label for the first UE or a label with a higher importance than the first reference label. In an embodiment of the present disclosure, the electronic device may identify (or determine or select), as MAC contexts to be migrated, MAC contexts for the second UE corresponding to at least one of a second reference label for the second UE or a label with a higher importance than the second reference label.

In an embodiment of the present disclosure, the electronic device may migrate (or replicate) data of the MAC contexts to be migrated, from the source DU 320 to the target DU 330. For example, to migrate (or replicate) the data of the MAC contexts to be migrated, the electronic device may control the source DU 320 or the target DU 330. For example, to migrate (or replicate) the data of the MAC contexts to be migrated, the electronic device may transmit, to the source DU 320 or the target DU 330, a message requesting (or instructing to perform) migration, or information (or data) to be used for the migration. For example, the electronic device may obtain information (e.g., parameter values) that was used to configure (or include or store) the data of the MAC contexts to be migrated in the source DU 320, and configure (or store) the data of the MAC contexts to be migrated in the target DU 330 by using the obtained information. For example, the electronic device may migrate, to the target DU 330, the data of the MAC contexts to be migrated, by replicating the data of the MAC contexts to be migrated, which is configured (or included or stored) in the source DU 320, to the target DU 330.

In an embodiment of the present disclosure, the electronic device may cause the target DU 330 to initiate MAC scheduling for the target cell. For example, when the permissible MAC scheduling interruption duration has elapsed after the MAC scheduling of the source DU 320 was interrupted, the target DU 330 (e.g., an electronic device including the target DU 330) may initiate MAC scheduling for the target cell. For example, after the data of the MAC contexts to be migrated is replicated (or migrated) from the source DU 320 to the target DU 330, the target DU 330 (e.g., an electronic device including the target DU 330) may initiate MAC scheduling for the target cell. For example, after the MAC contexts to be migrated are replicated (or migrated) from the source DU 320 to the target DU 330, and the fronthaul interface and the control path are switched from the source DU 320 to the target DU 330, the target DU 330 may initiate MAC scheduling for the target cell. Thus, after the data of the MAC contexts to be migrated is replicated (or migrated) from the source DU 320 to the target DU 330, a MAC scheduling operation for the communication service for the plurality of UEs associated with the target cell may be performed by the target DU 330, rather than by the source DU 320.

Referring to FIG. 7, the source DU 320 may interrupt MAC scheduling for the target cell (710). The source DU 320 may migrate MAC contexts to the target DU 330 (720). For example, the source DU 320 may provide at least a part of the data of the MAC contexts for the target cell (e.g., the data of the MAC contexts to be migrated) to the target DU 330 based on the reference label for each UE. For example, the source DU 320 may migrate, to the target DU 330, the data of the MAC contexts for the first UE corresponding to at least one of the first reference label for the first UE or a label with a higher importance than the first reference label.

The target DU 330 may receive, from the source DU 320, the data of the MAC contexts to be migrated, and store (or configure) the data in the MAC layer of the target DU 330. In response to successful (or complete) migration of the data of the MAC contexts to be migrated, the target DU 330 may provide a return response to the source DU 320. In response to successful (or complete) migration of the data of the MAC contexts to be migrated, the target DU 330 may initiate MAC scheduling for the target cell (730).

The source DU 320 may receive the return response from the target DU 330 and provide the other device or module 400 with information indicating the success of the MAC context migration. For example, the source DU 320 may provide an administrator client device or a user client device with the information indicating the success of the MAC context migration.

FIG. 7 illustrates an example in which the source DU 320 provides the other device or module 400 with the information indicating the success of the MAC context migration, but the present disclosure is not limited thereto. For example, the source DU 320 may output information indicating the success of the MAC context migration through an output device connected to, attached to, or embedded in an electronic device including the source DU 320. For example, the target DU 330 may transmit information indicating the success of the MAC context migration to the other device or module 400. For example, the target DU 330 may output information indicating the success of the MAC context migration through an output device connected to, attached to, or embedded in an electronic device including the target DU 330.

For example, the source DU 320 may transmit information indicating the success of the MAC context migration, regardless of whether MAC scheduling of the target DU 330 for the target cell has started. For example, after migrating the MAC contexts to be migrated to the target DU 330, the source DU 320 may transmit information indicating the success of the MAC context migration. For example, in response to receiving, from the target DU 330, a response (e.g., a return response) indicating the completion (or success) of the migration of the MAC contexts to be migrated, the source DU 320 may transmit information indicating the success of the MAC context migration.

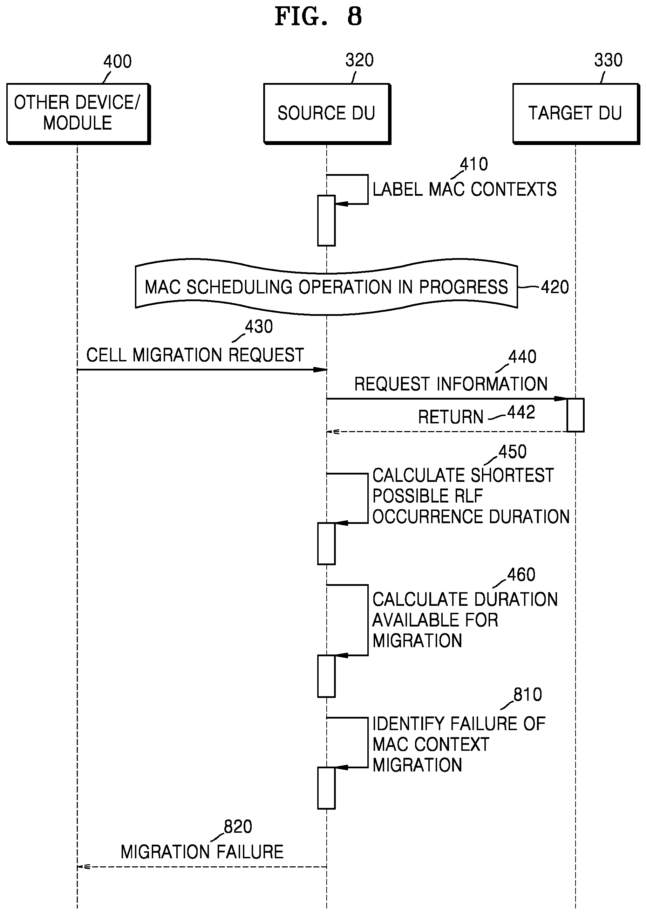

FIG. 8 is a diagram illustrating an example in which migration of MAC contexts fails, according to an embodiment of the present disclosure.

In describing FIG. 8, redundant descriptions provided above with reference to any one of FIGS. 1 to 7 may be omitted. For example, among a plurality of operations illustrated in FIG. 8, the descriptions of operations 410 to 460, which have been provided above with reference to FIG. 4, may be omitted.

In an embodiment of the present disclosure, based on identifying (or determining) that a predicted degree of RLF occurrence is greater than a permissible degree of RLF occurrence, the electronic device may identify (or determine) a failure of MAC context migration. For example, based on identifying (or determining) that there is no case in which the predicted degree of RLF occurrence is not greater than the permissible degree of RLF occurrence, the electronic device may identify (or determine) a failure of MAC context migration. For example, in response to predicting that more RLFs will occur than the permissible degree of RLF occurrence in cases in which the data of the MAC contexts to be migrated, having a size less than or equal to the maximum transmittable data size, is migrated, the electronic device may determine a failure of MAC context migration. For example, in response to identifying (or determining) that there is no case in which the data size of the MAC contexts to be migrated is not greater than the maximum transmittable data size and the predicted degree of RLF occurrence is not greater than the permissible degree of RLF occurrence, the electronic device may identify (or determine) a failure of MAC context migration.

In an embodiment of the present disclosure, the electronic device may perform an operation for determining a reference label for each of a plurality of UEs such that the predicted degree of RLF occurrence is not greater than the permissible degree of RLF occurrence, and the data size of the MAC contexts to be migrated is not greater than the maximum transmittable data size. For example, to determine the reference labels for the plurality of UEs that satisfy a condition for RLF occurrence and a condition for data size, the electronic device may determine, through a loop operation, whether the condition for RLF occurrence or the condition for data size is satisfied in various cases. In an embodiment of the present disclosure, the electronic device may fail to determine (or select or identify) the reference labels of the plurality of UEs that satisfy both the condition for RLF occurrence and the condition for data size. For example, the electronic device may perform at least some of the operations performed in operation 470 of FIG. 4 described above, but may fail to determine the reference labels for the plurality of UEs that satisfy the condition for RLF occurrence and the condition for data size.

In an embodiment of the present disclosure, based on failing to determine the reference labels for the plurality of UEs that satisfy the condition for RLF occurrence and the condition for data size, the electronic device may identify (or determine) a failure of MAC context migration. For example, in response to identifying that there is no reference labels for the plurality of UEs that satisfy the condition for RLF occurrence and the condition for data size, the electronic device may identify (or determine) a failure of MAC context migration.

In an embodiment of the present disclosure, the electronic device may provide the other device or module 400 with information indicating a failure of MAC context migration. For example, the other device may include an administrator client device or a user client device. In an embodiment of the present disclosure, the electronic device may output information indicating a failure of MAC context migration through an output device connected to, attached to, or embedded in the electronic device.

Referring to FIG. 8, based on the duration available for MAC context migration (or the permissible MAC scheduling interruption duration) and the permissible degree of RLF occurrence, the source DU 320 may identify (or determine) that the predicted degree of RLF occurrence is greater than the permissible degree of RLF occurrence. For example, based on the duration available for MAC context migration (or the permissible MAC scheduling interruption duration) and the permissible degree of RLF occurrence, the source DU 320 may identify (or determine) that the condition for RLF occurrence and the condition for data size cannot be satisfied. Accordingly, the source DU 320 may identify (or determine) a failure of MAC context migration (810). In response to identifying the failure of MAC context migration, the source DU 320 may provide the other device or module 400 with information indicating the failure of MAC context migration (820).

In an embodiment of the present disclosure, after a failure of MAC context migration, the electronic device may periodically or aperiodically identify (or determine) whether it is possible to migrate MAC contexts with a predicted RLF occurrence that is not greater than the permissible degree of RLF occurrence. For example, the electronic device may determine, at a predetermined period (e.g., a period that does not affect performance), whether it is possible to migrate MAC contexts with a predicted degree of RLF occurrence that is not greater than the permissible degree of RLF occurrence. For example, the electronic device may periodically or aperiodically determine whether it is possible to migrate MAC contexts while satisfying the condition for RLF occurrence and the condition for data size.

In an embodiment of the present disclosure, based on identifying (or determining) that it is possible to migrate MAC contexts with a predicted degree of RLF occurrence that is not greater than the permissible degree of RLF occurrence, the electronic device (e.g., the electronic device of the source DU 320) may provide the other device or module 400 with information indicating that the MAC context migration is possible. For example, when a point in time is reached at which it is possible to migrate MAC contexts while satisfying the condition for RLF occurrence, the electronic device may provide the other device or module 400 with information indicating that the MAC context migration is possible. For example, in response to identifying (or determining) that it is possible to migrate MAC contexts while satisfying the condition for RLF occurrence and the condition for data size, the electronic device may provide the other device or module 400 with information indicating that the MAC context migration is possible.

In an embodiment of the present disclosure, based on identifying (or determining) that it is possible to migrate MAC contexts with a predicted degree of RLF occurrence that is not greater than the permissible degree of RLF occurrence, the electronic device (e.g., the electronic device of the source DU 320) may output information indicating the success of the MAC context migration through an output device connected to, attached to, or embedded in the electronic device. For example, in response to identifying (or determining) that it is possible to migrate MAC contexts while satisfying the condition for RLF occurrence and the condition for data size, the electronic device may output information indicating the success of the MAC context migration through an output device connected to, attached to, or embedded in the electronic device.

In an embodiment of the present disclosure, based on identifying (or determining) that it is possible to migrate MAC contexts with a predicted degree of RLF occurrence that is not greater than the permissible degree of RLF occurrence, the electronic device (e.g., the electronic device of the source DU 320) may resume (or retry) the target cell migration or the MAC context migration. For example, in response to identifying (or determining) that it is possible to migrate MAC contexts while satisfying the condition for RLF occurrence and the condition for data size, the electronic device may resume (or retry) the target cell migration or the MAC context migration.

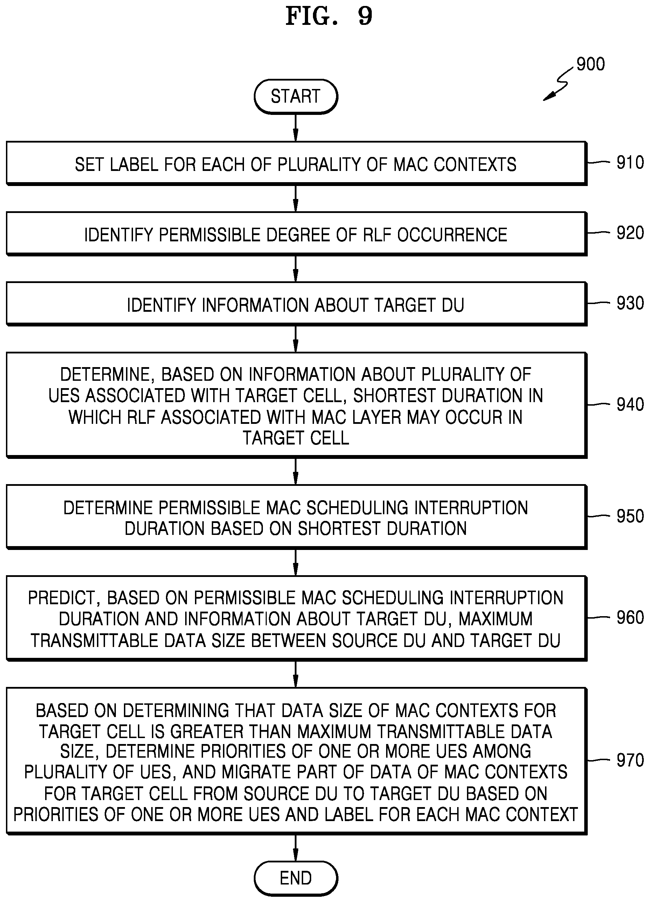

FIG. 9 is a diagram illustrating an example of an operation method of an electronic device, according to an embodiment of the present disclosure.

In describing FIG. 9, redundant descriptions provided above with reference to any one of FIGS. 1 to 8 may be omitted.

FIG. 9 may illustrate an example of an operation method 900 of an electronic device. In an embodiment of the present disclosure, the electronic device that performs the method 900 may include a cell migration module (e.g., a scaling agent module) configured to manage, control, or process cell migration. In an embodiment of the present disclosure, the electronic device that performs the method 900 may include a device of a source DU, a device of a target DU, and/or a separate, different device. For example, the source DU (or the device of the source DU) may include a cell migration module. For example, the target DU (or the device of the target DU) may include a cell migration module. For example, the separate device that is different from the source DU and the target DU may include a cell migration module.

Referring to FIG. 9, the method 900 according to an embodiment of the present disclosure may include operations 910 to 970. In an embodiment of the present disclosure, operations 910 to 970 of the method 900 may be performed by at least one processor included in the electronic device. The method 900 is not limited to that illustrated in FIG. 9, and in one or more embodiments, the method 900 may further include operations not illustrated in FIG. 9, or some operations may be omitted.

In operation 910, the electronic device may set a label for each of a plurality of MAC contexts. For example, the electronic device may set a label for each of the plurality of MAC contexts based on labeling information. For example, a MAC context with a label corresponding to the highest importance (e.g., Label 3) among the plurality of labels may always be included in the MAC contexts to be migrated. In an embodiment of the present disclosure, the label set for each of the plurality of MAC contexts may indicate an importance based on the influence that the presence or absence of the MAC context corresponding to the label has on UE traffic. For example, the label set for each of the plurality of MAC contexts may correspond to an importance based on the influence of the MAC context on UE traffic.

In operation 920, the electronic device may identify a permissible degree of RLF occurrence. For example, the permissible degree of RLF occurrence may include a condition or a degree related to the level to which RLFs that may occur during the migration process among the UEs belonging to the target cell will be permitted.

In operation 930, the electronic device may identify information about the target DU.

In operation 940, the electronic device may determine, based on information about a plurality of UEs associated with the target cell, the shortest duration in which an RLF associated with the MAC layer may occur in the target cell.

In operation 950, the electronic device may determine a permissible MAC scheduling interruption duration based on the shortest duration in which an RLF associated with the MAC layer may occur in the target cell.

In operation 960, the electronic device may predict, based on the permissible MAC scheduling interruption duration and the information about the target DU, a maximum transmittable data size between the source DU and the target DU.

In operation 970, based on determining that the data size of the MAC contexts for the target cell is greater than the maximum transmittable data size, the electronic device may determine priorities of one or more UEs among the plurality of UEs and migrate a part of the data of the MAC contexts for the target cell from the source DU to the target DU based on the priorities of the one or more UEs and the label for each MAC context. For example, the MAC contexts for the target cell may include MAC contexts for a first UE associated with the target cell and MAC contexts for a second UE associated with the target cell. In an embodiment of the present disclosure, the electronic device may stop MAC scheduling of the source DU and migrate a part of the data of the MAC contexts for the target cell from the source DU to the target DU.

In an embodiment of the present disclosure, the electronic device may determine the priorities of the one or more UEs based on at least one of RRC state information of the plurality of UEs or traffic information of the one or more UEs. For example, the electronic device may identify, based on the RRC state information of the plurality of UEs, one or more UEs that are in an RRC active state from among the plurality of UEs, and determine, based on the traffic information of the one or more UEs, the priorities of the one or more UEs in the RRC active state.

In an embodiment of the present disclosure, the electronic device may determine reference labels for the one or more UEs based on the priorities of the one or more UEs. The electronic device may migrate, from the source DU to the target DU, the data of the MAC contexts for a first UE included in the plurality of UEs, the MAC contexts corresponding to at least one of a first reference label for the first UE or a label with a higher importance than the first reference label.

In an embodiment of the present disclosure, the electronic device may adjust a second reference label for a second UE that is included in the plurality of UEs and has a lower priority than the first UE, such that the predicted degree of RLF occurrence is not greater than the permissible degree of RLF occurrence, and the data size of the MAC contexts to be migrated is not greater than the maximum transmittable data size. The electronic device may migrate, from the source DU to the target DU, the data of the MAC contexts for the second UE, the MAC contexts corresponding to at least one of the second reference label or a label with a higher importance than the second reference label. For example, the importance of the first reference label for the first UE may be lower than the importance of the second reference label for the second UE.

In an embodiment of the present disclosure, the electronic device may determine a third reference label for a third UE that is included in the plurality of UEs and is in an RRC idle state or an RRC inactive state, as a label predefined for the RRC idle state or the RRC inactive state. The electronic device may migrate, from the source DU to the target DU, the data of the MAC contexts for the third UE, the MAC contexts corresponding to at least one of the third reference label for the third UE or a label with a higher importance than the third reference label.

In an embodiment of the present disclosure, based on determining that the data size of the MAC contexts for the target cell is less than or equal to the maximum transmittable data size, the electronic device may migrate the data of all MAC contexts for the target cell from the source DU to the target DU.

In an embodiment of the present disclosure, based on determining that the predicted degree of RLF occurrence is greater than the permissible degree of RLF occurrence, the electronic device may determine a failure of MAC context migration.

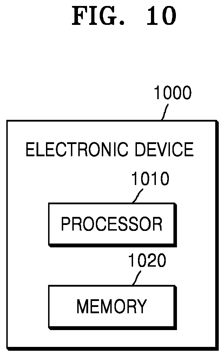

FIG. 10 is a diagram illustrating an example of an electronic device according to an embodiment of the present disclosure.

In describing FIG. 10, redundant descriptions provided above with reference to any one of FIGS. 1 to 9 may be omitted.

An electronic device 1000 illustrated in FIG. 10 is an electronic device that performs a cell migration operation for a DU, and may be a server device. For example, the electronic device 100, as a communication device constituting a RAN, may be a server device that constitutes a traditional RAN, such as a server device that performs an RU function, a server device that performs a DU function, a server device that performs a CU function, or a server device that performs an OAM function, or it may be a separate server device that controls cell migration (e.g., a scaling agent device).

In an embodiment of the present disclosure, the electronic device 1000 may include at least one processor 1010 and memory 1020, but is not limited thereto.

The processor 1010 may be electrically connected to the components included in the electronic device 1000 to perform computations or data processing for control and/or communication of the components included in the electronic device 1000. In an embodiment of the disclosure, the processor 1010 may load, into the memory, a request, a command, or data received from at least one of other components, process the request, command, or data, and store process result data in the memory. The processor 1010 is a component configured to control a series of processes for the electronic device 1000 to operate according to the embodiments described above, and may include one or more processors.

The one or more processors included in the processor 1010 may be circuitry such as an SoC or an IC. The one or more processors included in the processor 1010 may include at least one of general-purpose processors such as CPUs, MPUs, APs, or DSPs, dedicated graphics processors such as GPUs or VPUs, dedicated artificial intelligence processors such as NPUs, or dedicated communication processors such as CPs. In a case in which the one or more processors included in the processor 1010 are dedicated artificial intelligence processors, the dedicated artificial intelligence processors may be designed with a hardware structure specialized for processing a particular artificial intelligence model.

The processor 1010 may include various processing circuitry units and/or a plurality of processors. For example, the term 'processor' as used herein, including in the claims, may include various processing circuitry units including at least one processor. One or more of the at least one processor may be configured to perform one or more of the functions described herein, individually and/or collectively in a distributed manner. In the disclosure, when a 'processor', 'at least one processor', or 'one or more processors' are described as being configured to perform a plurality of functions, this may include a situation where one processor performs some of the functions and the other processor(s) performs the other functions, and a situation where a single processor performs all of the functions. In addition, the at least one processor may include a combination of processors configured to perform various functions in a distributed manner. The at least one processor may execute program instructions to achieve or perform various functions.

The processor 1010 may write data in the memory 1020 or read data stored in the memory 1020, and in particular, may execute a program or at least one instruction stored in the memory 1020 to process data according to predefined operation rules or an artificial intelligence model. The processor 1010 may perform control such that input data is processed according to predefined operation rules, algorithms, methods, or models stored in the memory 1020. The processor 1010 may perform control such that input data is processed based on data stored in the memory 1020. The processor 1010 may perform operations of predefined operation rules, algorithms, methods, or models stored in the memory 1020 by using input data.

The memory 1020 may be electrically connected to the processor 1010 and may store one or more modules, algorithms, operation rules, models, programs, instructions, or data associated with operations of components included in the electronic device 1000. For example, the memory 1020 may store one or more modules, algorithms, operating rules, models, programs, instructions, or data for the processor 1010 to perform processing and control.

The memory 1020 may include, but is not limited to, a storage medium such as a flash memory-type storage medium, a hard disk-type storage medium, a multimedia card micro-type storage medium, card-type memory (e.g., SD or XD memory), random-access memory (RAM), static RAM (SRAM), read-only memory (ROM), electrically erasable programmable ROM (EEPROM), programmable ROM (PROM), magnetic memory, a magnetic disc, or an optical disc, or a combination of such storage media. The memory 1020 may be configured to be included in the processor 1010, rather than existing separately. The memory 1020 may include volatile memory, nonvolatile memory, or a combination of volatile memory and nonvolatile memory. The memory 1020 may store a program or at least one instruction for performing the operations according to the embodiments described above. The memory 1020 may provide data stored therein to the processor 1010 in response to a request from the processor 1010.

In an embodiment of the present disclosure, the memory 1020 may store data or information that has been identified, obtained, generated, or determined by the electronic device 1000. The memory 1020 may store, in a compressed form, the data or information that has been identified, obtained, generated, or determined by the electronic device 1000.

Some modules (e.g., a cell migration module) that perform at least one operation of the electronic device 1000 may be implemented as a hardware module, a software module, and/or a combination thereof. The memory 1020 may include software modules that perform at least some of the operations of the electronic device 1000 described above. In an embodiment of the present disclosure, a module included in the memory 1020 may be executed by the processor 1010 to perform an operation. For example, a module (i.e., a software module) included in the memory 1020 may be executed under control of or according to a command of the processor 1010, and may include a program, a model, or an algorithm configured to perform operations of deriving output data for input data. Some modules that perform at least one operation of the electronic device 1000 may include a plurality of sub-modules or may constitute one module.

The electronic device 1000 may include more components than those illustrated in FIG. 10. In an embodiment of the disclosure, the electronic device 1000 may further include a communication interface (or a communication module) for communicating with an external device. In an embodiment of the disclosure, the electronic device 1000 may further include an input/output device and/or an input/output interface.

In an embodiment of the present disclosure, the electronic device 1000 may include a communication module for communicating with an external device. For example, the communication module of the electronic device 1000 may support establishment of a wired or wireless communication channel with another external device or server and execution of communication through the established communication channel. For example, the electronic device 1000 may communicate, through the communication module, with a device constituting a traditional RAN, such as a device that performs an RU function, a device that performs a DU function, a device that performs a CU function, or a device that performs an OAM function, or a separate device that controls cell migration (e.g., a scaling agent device).

In an embodiment of the present disclosure, the communication module may receive a signal, information, a request, and/or data from another external electronic device or server through wired or wireless communication, or may transmit a signal, information, a request, and/or data to the other external electronic device or server. According to an embodiment of the present disclosure, the communication module may include a wireless communication module (e.g., a cellular communication module, a short-range wireless communication module, or a global navigation satellite system (GNSS) communication module) or a wired communication module (e.g., a local area network (LAN) communication module, or a power line communication module), and by using any one of the communication modules, may communicate with an external electronic device or server through at least one network, for example, a short-range communication network (e.g., Bluetooth, Wi-Fi Direct, or Infrared Data Association (IrDA)) or a long-range communication network (e.g., a cellular network, the Internet, or a computer network (e.g., a LAN or a wide area network (WAN)).

In an embodiment of the present disclosure, the electronic device 1000 may exchange a signal, data, a request, and/or information with an external device through a network and the communication module. For example, the electronic device 1000 and the external device may directly exchange a signal, data, a request, and/or information, but the present disclosure is limited thereto. For example, the electronic device 1000 and the external device may also indirectly exchange a signal, data, a request, and/or information through another device.

The operations described above as being performed by the electronic device with reference to any one of FIGS. 1 to 10 may be performed by the cell migration module of the electronic device. For example, the operations described above as being performed by the electronic device may be performed by at least one processor of the electronic device.

The operations described above as being performed by the source DU with reference to any one of FIGS. 1 to 10 may be performed by an electronic device in which the source DU is included (or configured). For example, the operations described above as being performed by the source DU may be performed by at least one processor of an electronic device in which the source DU is included (or configured).

The operations described above as being performed by the target DU with reference to any one of FIGS. 1 to 10 may be performed by an electronic device in which the target DU is included (or configured). For example, the operations described above as being performed by the target DU may be performed by at least one processor of an electronic device in which the target DU is included (or configured).

One or more embodiments described above regarding the MAC layer with reference to any one of FIGS. 1 to 10 may also be applied to other units or layers.

In an embodiment of the present disclosure, an operation method of an electronic device may include setting labels for a plurality of MAC contexts, respectively. In an embodiment of the present disclosure, the method may include identifying a permissible degree of RLF occurrence. In an embodiment of the present disclosure, the method may include identifying information about a target DU. In an embodiment of the present disclosure, the method may include determining, based on information about a plurality of UEs associated with a target cell, a shortest duration in which an RLF associated with a MAC layer potentially occurs in the target cell. In an embodiment of the present disclosure, the method may include determining, based on the shortest duration, a permissible MAC scheduling interruption duration. In an embodiment of the present disclosure, the method may include predicting, based on the permissible MAC scheduling interruption duration and the information about the target DU, a maximum transmittable data size between a source DU and the target DU. In an embodiment of the present disclosure, the method may include, based on determining that a data size of MAC contexts for the target cell is greater than the maximum transmittable data size, determining priorities of one or more UEs among the plurality of UEs and migrating a part of data of the MAC contexts for the target cell from the source DU to the target DU based on the priorities of the one or more UEs and the labels.

In an embodiment of the present disclosure, the operation method of the electronic device may include, based on determining that the data size of the MAC contexts for the target cell is less than or equal to the maximum transmittable data size, migrating data of all MAC contexts for the target cell from the source DU to the target DU.

In an embodiment of the present disclosure, the determining of priorities of one or more UEs among the plurality of UEs and the migrating of the part of the data of the MAC contexts for the target cell from the source DU to the target DU based on the priorities of the one or more UEs and the labels, based on determining that the data size of the MAC contexts for the target cell is greater than the maximum transmittable data size, may include determining the priorities of the one or more UEs based on at least one of RRC state information of the plurality of UEs or traffic information of the one or more UEs.

In an embodiment of the present disclosure, the determining of the priorities of the one or more UEs based on at least one of the RRC state information of the plurality of UEs or the traffic information of the one or more UEs may include identifying, based on the RRC state information of the plurality of UEs, the one or more UEs that are in an RRC active state from among the plurality of UEs. In an embodiment of the present disclosure, the determining of the priorities of the one or more UEs based on at least one of the RRC state information of the plurality of UEs or the traffic information of the one or more UEs may include determining, based on the traffic information of the one or more UEs, the priorities of the one or more UEs in the RRC active state.

In an embodiment of the present disclosure, the determining of priorities of one or more UEs among the plurality of UEs and the migrating of the part of the data of the MAC contexts for the target cell from the source DU to the target DU based on the priorities of the one or more UEs and the labels, based on determining that the data size of the MAC contexts for the target cell is greater than the maximum transmittable data size, may include determining, based on the priorities of the one or more UEs, reference labels for the one or more UEs. In an embodiment of the present disclosure, the determining of priorities of one or more UEs among the plurality of UEs and the migrating of the part of the data of the MAC contexts for the target cell from the source DU to the target DU based on the priorities of the one or more UEs and the labels, based on determining that the data size of the MAC contexts for the target cell is greater than the maximum transmittable data size, may include migrating, from the source DU to the target DU, data of MAC contexts for a first UE included in the plurality of UEs, which correspond to at least one of a first reference label for the first UE or a label with a higher importance than the first reference label.

In an embodiment of the present disclosure, the determining of the reference labels for the one or more UEs based on the priorities of the one or more UEs may include adjusting a second reference label for a second UE that is included in the plurality of UEs and has a lower priority than the first UE, such that a predicted degree of RLF occurrence is not greater than the permissible degree of RLF occurrence, and a data size of MAC contexts to be migrated is not greater than the maximum transmittable data size. In an embodiment of the present disclosure, the migrating of the data of the MAC contexts for the first UE included in the plurality of UEs, which correspond to at least one of the first reference label for the first UE or the label with the higher importance than the first reference label, from the source DU to the target DU, may include migrating, from the source DU to the target DU, the data of the MAC contexts for the first UE, which correspond to at least one of the first reference label or the label with the higher importance than the first reference label, and data of MAC contexts for the second UE, which correspond to at least one of the second reference label or a label with a higher importance than the second reference label. In an embodiment of the present disclosure, the importance of the first reference label for the first UE may be lower than the importance of the second reference label for the second UE.

In an embodiment of the present disclosure, the determining of priorities of one or more UEs among the plurality of UEs and the migrating of the part of the data of the MAC contexts for the target cell from the source DU to the target DU based on the priorities of the one or more UEs and the labels, based on determining that the data size of the MAC contexts for the target cell is greater than the maximum transmittable data size, may include determining a third reference label for a third UE that is included in the plurality of UEs and is in an RRC idle state or an RRC inactive state, as a label predefined for the RRC idle state or the RRC inactive state. In an embodiment of the present disclosure, the determining of priorities of one or more UEs among the plurality of UEs and the migrating of the part of the data of the MAC contexts for the target cell from the source DU to the target DU based on the priorities of the one or more UEs and the labels, based on determining that the data size of the MAC contexts for the target cell is greater than the maximum transmittable data size, may include migrating, from the source DU to the target DU, data of MAC contexts for the third UE, which correspond to at least one of the third reference label for the third UE or a label with a higher importance than the third reference label.

In an embodiment of the present disclosure, the determining of priorities of one or more UEs among the plurality of UEs and the migrating of the part of the data of the MAC contexts for the target cell from the source DU to the target DU based on the priorities of the one or more UEs and the labels, based on determining that the data size of the MAC contexts for the target cell is greater than the maximum transmittable data size, may include stopping MAC scheduling of the source DU, and migrating the part of the data of the MAC contexts for the target cell from the source DU to the target DU.

In an embodiment of the present disclosure, the operation method of the electronic device may include, based on determining that a predicted degree of RLF occurrence is greater than the permissible degree of RLF occurrence, determining a failure of MAC context migration.

In an embodiment of the present disclosure, a label set for each of the plurality of MAC contexts may indicate an importance based on an influence that presence or absence of a MAC context corresponding to the label has on UE traffic.

In an embodiment of the present disclosure, there may be provided a computer-readable recording medium having recorded thereon a program for causing a computer to execute the method.

In an embodiment of the present disclosure, an electronic device may include memory storing one or more instructions and at least one processor configured to execute the one or more instructions stored in the memory. In an embodiment of the present disclosure, the at least one processor may execute the one or more instructions to set labels for a plurality of MAC contexts, respectively. In an embodiment of the present disclosure, the at least one processor may execute the one or more instructions to identify a permissible degree of RLF occurrence. In an embodiment of the present disclosure, the at least one processor may execute the one or more instructions to identify information about a target DU. In an embodiment of the present disclosure, the at least one processor may execute the one or more instructions to determine, based on information about a plurality of UEs associated with a target cell, a shortest duration in which an RLF associated with a MAC layer potentially occurs in the target cell. In an embodiment of the present disclosure, the at least one processor may execute the one or more instructions to determine, based on the shortest duration, a permissible MAC scheduling interruption duration. In an embodiment of the present disclosure, the at least one processor may execute the one or more instructions to predict, based on the permissible MAC scheduling interruption duration and the information about the target DU, a maximum transmittable data size between a source DU and the target DU. In an embodiment of the present disclosure, the at least one processor may execute the one or more instructions to, based on determining that a data size of MAC contexts for the target cell is greater than the maximum transmittable data size, determine priorities of one or more UEs among the plurality of UEs and migrate a part of data of the MAC contexts for the target cell from the source DU to the target DU based on the priorities of the one or more UEs and the labels.

In an embodiment of the present disclosure, the at least one processor may migrate, based on determining that the data size of the MAC contexts for the target cell is less than or equal to the maximum transmittable data size, data of all MAC contexts for the target cell from the source DU to the target DU.

In an embodiment of the present disclosure, the at least one processor may determine the priorities of the one or more UEs based on at least one of RRC state information of the plurality of UEs or traffic information of the one or more UEs.

In an embodiment of the present disclosure, the at least one processor may identify, based on the RRC state information of the plurality of UEs, the one or more UEs that are in an RRC active state from among the plurality of UEs. In an embodiment of the present disclosure, the at least one processor may determine, based on the traffic information of the one or more UEs, the priorities of the one or more UEs in the RRC active state.

In an embodiment of the present disclosure, the at least one processor may determine, based on the priorities of the one or more UEs, reference labels for the one or more UEs. In an embodiment of the present disclosure, the at least one processor may migrate, from the source DU to the target DU, data of MAC contexts for a first UE included in the plurality of UEs, which correspond to at least one of a first reference label for the first UE or a label with a higher importance than the first reference label.

In an embodiment of the present disclosure, the at least one processor may adjust a second reference label for a second UE that is included in the plurality of UEs and has a lower priority than the first UE, such that a predicted degree of RLF occurrence is not greater than the permissible degree of RLF occurrence, and a data size of MAC contexts to be migrated is not greater than the maximum transmittable data size. In an embodiment of the present disclosure, the at least one processor may migrate, from the source DU to the target DU, the data of the MAC contexts for the first UE, which correspond to at least one of the first reference label or the label with the higher importance than the first reference label, and data of MAC contexts for the second UE, which correspond to at least one of the second reference label or a label with a higher importance than the second reference label. In an embodiment of the present disclosure, the importance of the first reference label for the first UE may be lower than the importance of the second reference label for the second UE.

In an embodiment of the present disclosure, the at least one processor may determine a third reference label for a third UE that is included in the plurality of UEs and is in an RRC idle state or an RRC inactive state, as a label predefined for the RRC idle state or the RRC inactive state. In an embodiment of the present disclosure, the at least one processor may migrate, from the source DU to the target DU, data of MAC contexts for the third UE, which correspond to at least one of the third reference label for the third UE or a label with a higher importance than the third reference label.

In an embodiment of the present disclosure, the at least one processor may stop MAC scheduling of the source DU, and migrate the part of the data of the MAC contexts for the target cell from the source DU to the target DU.

In an embodiment of the present disclosure, the at least one processor may determine, based on determining that a predicted degree of RLF occurrence is greater than the permissible degree of RLF occurrence, a failure of MAC context migration.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored.

According to an embodiment, methods according to various embodiments disclosed herein may be included in a computer program product and then provided. The computer program product may be traded as a commodity between sellers and buyers. The computer program product may be distributed in the form of a machine-readable storage medium (e.g., a compact disc ROM (CD-ROM)), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or memory of a relay server.

**Claims**

1.  An operation method of an electronic device, the operation method comprising:

    setting labels for a plurality of medium access control (MAC) contexts, respectively;
    identifying a permissible degree of radio link failure (RLF) occurrence;
    identifying information about a target distributed unit (DU) (330);
    determining, based on information about a plurality of user equipments (UEs) associated with a target cell, a shortest duration in which an RLF associated with a MAC layer potentially occurs in the target cell;
    determining, based on the shortest duration, a permissible MAC scheduling interruption duration;
    predicting, based on the permissible MAC scheduling interruption duration and the information about the target DU (330), a maximum transmittable data size between a source DU (320) and the target DU (330); and
    based on determining that a data size of MAC contexts for the target cell is greater than the maximum transmittable data size, determining priorities of one or more UEs among the plurality of UEs and migrating a part of data of the MAC contexts for the target cell from the source DU (320) to the target DU (330) based on the priorities of the one or more UEs and the labels.

2.  The operation method of claim 1, further comprising, based on determining that the data size of the MAC contexts for the target cell is less than or equal to the maximum transmittable data size, migrating data of all MAC contexts for the target cell from the source DU (320) to the target DU (330).

3.  The operation method of claim 1 or 2, wherein the determining of priorities of one or more UEs among the plurality of UEs and the migrating of the part of the data of the MAC contexts for the target cell from the source DU (320) to the target DU (330) based on the priorities of the one or more UEs and the labels, based on determining that the data size of the MAC contexts for the target cell is greater than the maximum transmittable data size, comprises determining the priorities of the one or more UEs based on at least one of radio resource control (RRC) state information of the plurality of UEs or traffic information of the one or more UEs.

4.  The operation method of claim 3, wherein the determining of the priorities of the one or more UEs based on at least one of the RRC state information of the plurality of UEs or the traffic information of the one or more UEs comprises:

    identifying, based on the RRC state information of the plurality of UEs, the one or more UEs that are in an RRC active state from among the plurality of UEs; and
    determining, based on the traffic information of the one or more UEs, the priorities of the one or more UEs in the RRC active state.

5.  The operation method of any one of claims 1 to 4, wherein the determining of priorities of one or more UEs among the plurality of UEs and the migrating of the part of the data of the MAC contexts for the target cell from the source DU (320) to the target DU (330) based on the priorities of the one or more UEs and the labels, based on determining that the data size of the MAC contexts for the target cell is greater than the maximum transmittable data size, comprises:

    determining, based on the priorities of the one or more UEs, reference labels for the one or more UEs; and
    migrating, from the source DU (320) to the target DU (330), data of MAC contexts for a first UE included in the plurality of UEs, which correspond to at least one of a first reference label for the first UE or a label with a higher importance than the first reference label.

6.  The operation method of claim 5, wherein the determining of the reference labels for the one or more UEs based on the priorities of the one or more UEs comprises adjusting a second reference label for a second UE that is included in the plurality of UEs and has a lower priority than the first UE, such that a predicted degree of RLF occurrence is not greater than the permissible degree of RLF occurrence, and a data size of MAC contexts to be migrated is not greater than the maximum transmittable data size,

    the migrating of the data of the MAC contexts for the first UE included in the plurality of UEs, which correspond to at least one of the first reference label for the first UE or the label with the higher importance than the first reference label, from the source DU (320) to the target DU (330), comprises migrating, from the source DU (320) to the target DU (330), the data of the MAC contexts for the first UE, which correspond to at least one of the first reference label or the label with the higher importance than the first reference label, and data of MAC contexts for the second UE, which correspond to at least one of the second reference label or a label with a higher importance than the second reference label, and

the importance of the first reference label for the first UE is lower than the importance of the second reference label for the second UE.

7. The operation method of any one of claims 1 to 6, wherein the determining of priorities of one or more UEs among the plurality of UEs and the migrating of the part of the data of the MAC contexts for the target cell from the source DU (320) to the target DU (330) based on the priorities of the one or more UEs and the labels, based on determining that the data size of the MAC contexts for the target cell is greater than the maximum transmittable data size, comprises:

determining a third reference label for a third UE that is included in the plurality of UEs and is in an RRC idle state or an RRC inactive state, as a label predefined for the RRC idle state or the RRC inactive state; and

migrating, from the source DU (320) to the target DU (330), data of MAC contexts for the third UE, which correspond to at least one of the third reference label for the third UE or a label with a higher importance than the third reference label.

8. The method of any one of claims 1 to 7, wherein the determining of priorities of one or more UEs among the plurality of UEs and the migrating of the part of the data of the MAC contexts for the target cell from the source DU (320) to the target DU (330) based on the priorities of the one or more UEs and the labels, based on determining that the data size of the MAC contexts for the target cell is greater than the maximum transmittable data size, comprises stopping MAC scheduling of the source DU (320), and migrating the part of the data of the MAC contexts for the target cell from the source DU (320) to the target DU (330).

9. The operation method of any one of claims 1 to 8, further comprising, based on determining that a predicted degree of RLF occurrence is greater than the permissible degree of RLF occurrence, determining a failure of MAC context migration.

10. The operation method of any one of claims 1 to 9, wherein a label set for each of the plurality of MAC contexts indicates an importance based on an influence that presence or absence of a MAC context corresponding to the label has on UE traffic.

11. A computer-readable recording medium having recorded thereon a program for causing a computer to execute the operation method of any one of claims 1 to 10.

12. An electronic device (1000) comprising:

memory (1020) storing one or more instructions; and

at least one processor (1010) configured to execute the one or more instructions stored in the memory (1020), wherein the at least one processor (1010) is further configured to execute the one or more instructions to:

set labels for a plurality of medium access control (MAC) contexts, respectively,

identify a permissible degree of radio link failure (RLF) occurrence,

identify information about a target distributed unit (DU) (330),

determine, based on information about a plurality of user equipments (UEs) associated with a target cell, a shortest duration in which an RLF associated with a MAC layer potentially occurs in the target cell,

determine, based on the shortest duration, a permissible MAC scheduling interruption duration,

predict, based on the permissible MAC scheduling interruption duration and the information about the target DU (330), a maximum transmittable data size between a source DU (320) and the target DU (330),

based on determining that a data size of MAC contexts for the target cell is greater than the maximum transmittable data size, determine priorities of one or more UEs among the plurality of UEs and migrate a part of data of the MAC contexts for the target cell from the source DU (320) to the target DU (330) based on the priorities of the one or more UEs and the labels.

13. The electronic device of claim 12, wherein the at least one processor (1010) is further configured to, based on determining that the data size of the MAC contexts for the target cell is less than or equal to the maximum transmittable data size, migrate data of all MAC contexts for the target cell from the source DU (320) to the target DU (330).

14. The electronic device of claim 12 or 13, wherein the at least one processor (1010) is further configured to determine the priorities of the one or more UEs based on at least one of radio resource control (RRC) state information of the plurality of UEs or traffic information of the one or more UEs.

15. The electronic device of any one of claims 12 to 14, wherein the at least one processor (1010) is further configured to determine, based on the priorities of the one or more UEs, reference labels for the one or more UEs, and migrate, from the source DU (320) to the target DU (330), data of MAC contexts for a first UE included in the plurality of UEs, which correspond to at least one of a first reference label for the first UE or a label with a higher importance than the first reference label.

**FIG. 1**

CORE NETWORK — 110

CU — 122

120

DU — 124_4

DU — 124_3

SCALE IN

SCALE OUT

126

DU — 124_2

DU — 124_1

RU — 128_6

RU — 128_5

RU — 128_4

RU — 128_3

RU — 128_2

RU — 128_1

UE — 130_6

UE — 130_5

UE — 130_4

UE — 130_3

UE — 130_2

UE — 130_1

# FIG. 2

200

START

MIGRATE CELL CONFIGURATION INFORMATION — 210

MIGRATE UE CONTEXT — 220

SWITCH FRONTHAUL INTERFACE, SWITCH CONTROL PATH, AND MIGRATE MAC CONTEXT — 230

PERFORM CELL RELEASE PROCESS FOR PHY LAYER AND MAC LAYER OF SOURCE DU — 240

MIGRATE RLC CONTEXT AND SWITCH F1 PATH — 250

PERFORM CELL RELEASE PROCESS FOR RLC LAYER OF SOURCE DU — 260

END

# FIG. 3A

# FIG. 3B

CU —310

320

322

RLC

MAC

SECOND MAC CONTEXT DATA —352

324

PHY

326

330

332

RLC

334

MAC

SECOND MAC CONTEXT DATA —352

336

PHY

RU —340

UE —342

EP 4 757 390 A1

# FIG. 4

# FIG. 5A

510

| UE LIST | REFERENCE LABEL |
|---------|-----------------|
| UE 1 | Label 0 |
| UE 2 | Label 0 |
| UE 3 | Label 1 |
| … | … |
| UE n | Label 1 |

# FIG. 5B

520

| UE LIST | REFERENCE LABEL |
|---------|-----------------|
| UE 1 | Label 0 |
| UE 2 | Label 0 |
| UE 3 | Label 1 |
| … | … |
| UE n | Label 2 |

# FIG. 6A

610

| UE GROUP LIST | REFERENCE LABEL |
|---|---|
| FIRST UE GROUP | Label 0 |
| SECOND UE GROUP | Label 0 |
| THIRD UE GROUP | Label 1 |
| ... | ... |
| m−TH UE GROUP | Label 1 |

# FIG. 6B

620

| UE GROUP LIST | REFERENCE LABEL |
|---|---|
| FIRST UE GROUP | Label 0 |
| SECOND UE GROUP | Label 0 |
| THIRD UE GROUP | Label 1 |
| ... | ... |
| m−TH UE GROUP | Label 2 |

# FIG. 7

```
        400                    320                        330
         |                      |                          |
┌──────────────────┐  ┌──────────────────┐   ┌──────────────────┐
│  OTHER DEVICE/   │  │    SOURCE DU     │   │    TARGET DU     │
│     MODULE       │  │                  │   │                  │
└──────────────────┘  └──────────────────┘   └──────────────────┘
```

710 INTERRUPT MAC SCHEDULING FOR TARGET CELL

720 MIGRATE MAC CONTEXTS

RETURN

730 INITIATE MAC SCHEDULING FOR TARGET CELL

740 SUCCESS OF MAC CONTEXT MIGRATION

# FIG. 8

400
OTHER DEVICE/
MODULE

320
SOURCE DU

330
TARGET DU

410
LABEL MAC CONTEXTS

MAC SCHEDULING OPERATION IN PROGRESS —420

430
CELL MIGRATION REQUEST

440
REQUEST INFORMATION

RETURN —442

450
CALCULATE SHORTEST
POSSIBLE RLF
OCCURRENCE DURATION

460
CALCULATE DURATION
AVAILABLE FOR
MIGRATION

810
IDENTIFY FAILURE OF
MAC CONTEXT
MIGRATION

820
MIGRATION FAILURE

# FIG. 9

900

( START )

SET LABEL FOR EACH OF PLURALITY OF MAC CONTEXTS —— 910

IDENTIFY PERMISSIBLE DEGREE OF RLF OCCURRENCE —— 920

IDENTIFY INFORMATION ABOUT TARGET DU —— 930

DETERMINE, BASED ON INFORMATION ABOUT PLURALITY OF UES ASSOCIATED WITH TARGET CELL, SHORTEST DURATION IN WHICH RLF ASSOCIATED WITH MAC LAYER MAY OCCUR IN TARGET CELL —— 940

DETERMINE PERMISSIBLE MAC SCHEDULING INTERRUPTION DURATION BASED ON SHORTEST DURATION —— 950

PREDICT, BASED ON PERMISSIBLE MAC SCHEDULING INTERRUPTION DURATION AND INFORMATION ABOUT TARGET DU, MAXIMUM TRANSMITTABLE DATA SIZE BETWEEN SOURCE DU AND TARGET DU —— 960

BASED ON DETERMINING THAT DATA SIZE OF MAC CONTEXTS FOR TARGET CELL IS GREATER THAN MAXIMUM TRANSMITTABLE DATA SIZE, DETERMINE PRIORITIES OF ONE OR MORE UES AMONG PLURALITY OF UES, AND MIGRATE PART OF DATA OF MAC CONTEXTS FOR TARGET CELL FROM SOURCE DU TO TARGET DU BASED ON PRIORITIES OF ONE OR MORE UES AND LABEL FOR EACH MAC CONTEXT —— 970

( END )

# FIG. 10

1000

ELECTRONIC DEVICE

1010

PROCESSOR

1020

MEMORY

## INTERNATIONAL SEARCH REPORT

| International application No. |
| --- |
| **PCT/KR2024/011734** |

### A.    CLASSIFICATION OF SUBJECT MATTER

**H04W 24/04**(2009.01)i; **H04W 76/18**(2018.01)i; **H04W 28/04**(2009.01)i; **H04W 28/02**(2009.01)i; **H04L 47/24**(2022.01)i; **H04W 88/08**(2009.01)i; **H04W 72/0446**(2023.01)i

According to International Patent Classification (IPC) or to both national classification and IPC

### B.    FIELDS SEARCHED

Minimum documentation searched (classification system followed by classification symbols)

H04W 24/04(2009.01); H04L 29/08(2006.01); H04W 28/08(2009.01); H04W 36/02(2009.01); H04W 36/08(2009.01); H04W 36/12(2009.01); H04W 84/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DU(distributed unit), RLF(radio link failure), MAC(medium access control), context, 이전(migration)

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2023-0090963 A (SAMSUNG ELECTRONICS CO., LTD.) 22 June 2023 (2023-06-22)<br>      See paragraphs [0033]-[0066]. | 1-15 |
| A | US 2021-0219182 A1 (ZTE CORPORATION) 15 July 2021 (2021-07-15)<br>      See paragraphs [0043]-[0047]. | 1-15 |
| A | WO 2022-153249 A1 (TELEFONAKTIEBOLAGET LM ERICSSON (PUBL)) 21 July 2022 (2022-07-21)<br>      See paragraphs [0043]-[0050]. | 1-15 |
| A | US 2023-0232294 A1 (TELEFONAKTIEBOLAGET LM ERICSSON (PUBL)) 20 July 2023 (2023-07-20)<br>      See paragraphs [0017]-[0092]. | 1-15 |
| A | US 2019-0342809 A1 (KT CORPORATION) 07 November 2019 (2019-11-07)<br>      See paragraphs [0052]-[0142]. | 1-15 |

☐ Further documents are listed in the continuation of Box C.        ☑ See patent family annex.

| | | |
| --- | --- | --- |
| * | Special categories of cited documents: | |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" | document member of the same patent family |

| Date of the actual completion of the international search | Date of mailing of the international search report |
| --- | --- |
| **18 November 2024** | **18 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011734**

| Patent document cited in search report | | | Publication date (day/month/year) | Patent family member(s) | | | Publication date (day/month/year) |
|---|---|---|---|---|---|---|---|
| KR | 10-2023-0090963 | A | 22 June 2023 | AU | 2022-412721 | A1 | 22 June 2023 |
| | | | | CN | 118402223 | A | 26 July 2024 |
| | | | | EP | 4401386 | A1 | 17 July 2024 |
| | | | | US | 2023-0189077 | A1 | 15 June 2023 |
| | | | | WO | 2023-113385 | A1 | 22 June 2023 |
| US | 2021-0219182 | A1 | 15 July 2021 | CN | 110753372 | A | 04 February 2020 |
| | | | | CN | 110753372 | B | 30 May 2023 |
| | | | | EP | 3787355 | A1 | 03 March 2021 |
| | | | | EP | 3787355 | B1 | 25 January 2023 |
| | | | | JP | 2021-525042 | A | 16 September 2021 |
| | | | | JP | 7031018 | B2 | 07 March 2022 |
| | | | | US | 11388630 | B2 | 12 July 2022 |
| | | | | WO | 2020-019897 | A1 | 30 January 2020 |
| WO | 2022-153249 | A1 | 21 July 2022 | | None | | |
| US | 2023-0232294 | A1 | 20 July 2023 | CN | 116134886 | A | 16 May 2023 |
| | | | | EP | 4186277 | A1 | 31 May 2023 |
| | | | | WO | 2022-019825 | A1 | 27 January 2022 |
| US | 2019-0342809 | A1 | 07 November 2019 | KR | 10-2018-0007706 | A | 24 January 2018 |
| | | | | KR | 10-2100491 | B1 | 14 April 2020 |
| | | | | US | 10869243 | B2 | 15 December 2020 |
| | | | | WO | 2018-012873 | A1 | 18 January 2018 |

Form PCT/ISA/210 (patent family annex) (July 2022)